# EUROPEAN PATENT APPLICATION

(11) **EP 4 254 120 A1**
(43) Date of publication of application: **04.10.2023**
(21) Application number: 23165236.3
(22) Date of filing: 29.03.2023
(51) Int. Cl.: G05D 1/02, G01C 21/00

(54) **SYSTEM, METHOD, AND PROGRAM FOR MANAGING ENVIRONMENT MAP CORRESPONDING TO WORKPLACE WHERE MOVING MECHANISM MOVES**

(30) Priority: 01.04.2022 JP 2022061492
(71) Applicant: OMRON Corporation, Kyoto 600-8530 (JP)
(72) Inventor: ITO, Wataru, Kyoto-shi, Kyoto (JP)
(74) Representative: Mewburn Ellis LLP

(57) **Abstract**

Efficiency of work performed in a workplace where a moving mechanism moves is improved. A map management unit (10) manages an environment map (Me). A position detector (60) transmits, to the map management unit (10), information with which a current position of each of at least one position indicator (60) disposed at a workplace (WP) can be specified. The map management unit (10) specifies a current area including the current position on the environment map (Me). A moving mechanism (30) moves in the workplace (WP) while avoiding an entry prohibited area, based on the environment map (Me) in which a current area of each of the at least one position indicator (60) is set as the entry prohibited area, based on a state of the each of the at least one position indicator (60).

## Description

### CROSS REFERENCE TO RELATED APPLICATIONS

This nonprovisional application is based on Japanese Patent Application No. 2022-061492 filed on April 1, 2022, with the Japan Patent Office, the entire contents of which are hereby incorporated by reference.

### BACKGROUND OF THE INVENTION

### Field of the Invention

The present disclosure relates to a system, a method, and a program for managing an environment map corresponding to a workplace where a moving mechanism moves.

### Description of the Background Art

Conventionally, a configuration managing an environment map corresponding to a workplace where a moving mechanism moves is known. For example, Japanese Patent Laying-Open No. 2018-44983 discloses a movement attribute setting device that sets a movement attribute such as entry prohibition to a figure included in map information indicating a movable region of a moving body. According to the movement attribute setting device, the movement attribute related to the movement of the mobile body is set in the figure included in the map information, so that acquisition of a more appropriate path can be implemented by acquiring the path in consideration of the movement attribute set in the map information.

Japanese Patent Laying-Open No. 2009-301247 discloses a virtual wall system of an autonomous mobile robot that restricts movement of an autonomous-travel vacuum cleaner, which autonomously travels in a room to perform cleaning, to an entry prohibited area. According to the virtual wall system, the autonomous mobile robot does not traverse a boundary line, and a user can check a place where the boundary line is generated.

### SUMMARY OF THE INVENTION

A situation of the workplace changes over time. In order to improve efficiency of work performed at a workplace where the moving mechanism moves, an area (entry prohibited area) where entry of the moving mechanism is prohibited in the workplace is required to be appropriately set according to the situation. However, in Japanese Patent Laying-Open Nos. 2018-44983 and 2009-301247, setting of the entry prohibited area according to the situation of the workplace is not considered.

The present disclosure has been made to solve the above problems, and an object of the present disclosure is to improve efficiency of the work performed at the workplace where the moving mechanism moves.

A system according to one aspect of the present disclosure includes a moving mechanism, a map management unit, and a position detector. The moving mechanism is configured to move in a workplace based on an environment map corresponding to the workplace. The map management unit is configured to manage the environment map. The position detector is configured to transmit, to the map management unit, information with which a current position of each of at least one position indicator disposed at the workplace can be specified. The map management unit specifies a current area including the current position on the environment map. The moving mechanism moves in the workplace while avoiding an entry prohibited area, based on the environment map in which, based on a state of each of the at least one position indicator, a current area of the each of the at least one position indicator is set as the entry prohibited area.

According to this disclosure, a desired area of the workplace can be automatically set as the entry prohibited area by determining a state of the position indicator according to a situation of the workplace. As a result, the efficiency of work performed at the workplace where the moving mechanism moves can be improved.

In the above disclosure, the position detector may change the setting related to the entry prohibited area in response to input by a user to the position detector. The setting may include setting related to whether an area including the current position is designated as the entry prohibited area. The map management unit may specify the entry prohibited area based on the setting.

According to this disclosure, when the area including the current position of the position indicator is not set as the entry prohibited area, an unintended entry prohibited area can be prevented from being set as the workplace by changing the setting related to the entry prohibited area.

In the above disclosure, the setting related to the entry prohibited area may include setting related to a shape of the entry prohibited area and setting related to a size of the entry prohibited area.

According to this disclosure, the shape and size of the entry prohibited area can be designated according to the space required for the work.

In the above disclosure, the setting related to the entry prohibited area may include setting related to whether the entry prohibited area can be formed by a plurality of position indicators, and setting related to a group to which the plurality of position indicators belong. The entry prohibited area may include an area surrounded by the plurality of position indicators.

According to this disclosure, the user can set the entry prohibited area having a desired shape and direction according to the situation of the workplace. In addition, the entry prohibited area is enlarged by widening an interval between the plurality of position indicators without changing the number of the plurality of position indicators, so that the number of position indicators required for forming the entry prohibited area can be reduced.

In the above disclosure, the setting related to the entry prohibited area may include setting related to an update delay time from when movement of the at least one position indicator is detected to when the environment map is updated. The map management unit may set the current area as the entry prohibited area when the current area including the current position is not set as the entry prohibited area in the environmental map and time during which the current position is included in the current area is longer than the update delay time.

According to this disclosure, even when the movement of the position indicator is detected by the map management unit, the environment map is not updated during the update delay time. The environment map is prevented from being continuously updated while the position indicator is moved by the user, so that costs of calculation resources of the map management unit and the moving mechanism can be reduced.

In the above disclosure, the setting related to the entry prohibited area may include setting related to a size of an entry warning area set around the entry prohibited area. When the moving mechanism moves in the entry warning area, the moving mechanism may decelerate the speed of the moving mechanism below a normal speed and output an alarm to the outside, the alarm indicating that the moving mechanism is moving in the entry warning area.

According to the present disclosure, the moving mechanism travels in the entry warning area at the speed lower than the normal speed, and externally warns that the moving mechanism travels currently in the entry warning area. The user who works currently near a boundary of the entry prohibited area can easily notice the moving mechanism, and secure time until the user performs action to avoid the moving mechanism. As a result, the risk that the user blocking the path of the moving mechanism and the risk that the user colliding with the moving mechanism can be reduced.

In the above disclosure, when the current area is not set as the entry prohibited area on the environment map, the map management unit may transmit information related to the current area to the moving mechanism. The moving mechanism may set the current area as the entry prohibited area on the environment map and set an area not including the current position as an accessible area where the moving mechanism can move on the environment map.

According to this disclosure, not all the data of the environment map but information required for the update of the environment map is transmitted from the map management unit to the moving mechanism. Consequently, the communication amount between the map management unit and the moving mechanism accompanying the update of the environment map can be reduced.

In the above disclosure, the position detector may be configured to be portable by a user, and display the environment map in which the entry prohibited area is set.

According to this disclosure, the entry prohibited area set in the workplace can be checked in real time through the position detector in the workplace.

In the above disclosure, the position detector may display a region corresponding to the entry prohibited area at the workplace.

According to this disclosure, the region set as the entry prohibited area in the workplace can be known in real time at the workplace.

In the above disclosure, the system may further include an augmented reality display unit configured to image the at least one position indicator. The augmented reality display unit may superimpose a CG image indicating the entry prohibited area on an image of the at least one position indicator.

According to this disclosure, when viewing the augmented reality display unit, the site worker can check in real time at the workplace that the periphery of the position indicator disposed at the workplace is set to the entry prohibited area.

In the above disclosure, the system may further include an area planner configured to create a plan of the entry prohibited area. The map management unit may transmit a difference between the plan and the setting of the entry prohibited area based on the disposition of the at least one position indicator to each of the at least one position indicator and the area planner. Each of the at least one position indicator and the area planner may output information related to the difference.

According to this disclosure, the collation result (difference) between the plan of the entry prohibited area and the actual setting is notified to the user in real time, the plan or setting of the entry prohibited area can be promptly corrected.

In the above disclosure, the system may further include an area divider configured to divide the environment map into a plurality of areas.

According to this disclosure, the workplace can be divided in a desired manner.

In the above disclosure, the at least one position indicator may be configured to be movable by the user.

According to this disclosure, a desired area of the workplace can be automatically set as the entry prohibited area by moving the position indicator according to the situation of the workplace.

In the above disclosure, the at least one position indicator may be fixed to the workplace. The position detector may transmit an identifier of each of the at least one position indicator to the map management unit. The map management unit may specify the current area based on a correspondence between the identifier of each of the at least one position indicator and the information related to a position where each of the at least one position indicator is fixed.

According to the present disclosure, because positioning does not need to be performed on the position indicator, an error is not generated in the current position of the position indicator specified by the map management unit. As a result, the entry prohibited area can be accurately set in the environment map.

In the above disclosure, the at least one position indicator may be the position detector.

According to this disclosure, a desired area of the workplace can be automatically set as the entry prohibited area by moving the position detector according to the situation of the workplace.

A method according to another aspect of the present disclosure manages an environment map corresponding to a workplace in which a moving mechanism moves. The method includes transmitting information with which a current position of each of at least one position indicator disposed at the workplace can be specified, and specifying a current area including the current position on the environment map. The moving mechanism moves in the workplace while avoiding an entry prohibited area, based on the environment map in which, based on a state of each of the at least one position indicator, a current area of the each of the at least one position indicator is set as the entry prohibited area.

According to this disclosure, a desired area of the workplace can be automatically set as the entry prohibited area by determining a state of the position indicator according to a situation of the workplace. As a result, the efficiency of work performed at the workplace where the moving mechanism moves can be improved.

A program according to another aspect of the present disclosure manages an environment map corresponding to a workplace in which a moving mechanism moves. The program, when executed by a processor, causes the processor to transmit information with which a current position of each of at least one position indicator disposed at the workplace can be specified, and specify a current area including the current position on the environment map. The moving mechanism moves in the workplace while avoiding an entry prohibited area, based on the environment map in which, based on a state of each of the at least one position indicator, a current area of the each of the at least one position indicator is set as the entry prohibited area.

According to this disclosure, a desired area of the workplace can be automatically set as the entry prohibited area by determining a state of the position indicator according to a situation of the workplace. As a result, the efficiency of work performed at the workplace where the moving mechanism moves can be improved.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram illustrating a configuration of a production system according to a first embodiment.
Fig. 2 is a block diagram illustrating a configuration of a production system according to a modification of the first embodiment.
Fig. 3 is a view illustrating an example of a workplace in Fig. 2 divided into a plurality of areas.
Fig. 4 is a view illustrating an example of an environment map corresponding to a workplace WP in Fig. 3.
Fig. 5 is a view illustrating another example of the environment map corresponding to the workplace WP in Fig. 3.
Fig. 6 is a block diagram illustrating a configuration of a production system according to a second modification of the first embodiment.
Fig. 7 is a block diagram illustrating a hardware configuration example of a server in Fig. 6.
Fig. 8 is a block diagram illustrating a hardware configuration example of an AMR in Fig. 6.
Fig. 9 is a block diagram illustrating a hardware configuration example of a portable device in Fig. 6.
Fig. 10 is a block diagram illustrating a configuration of a production system according to a third modification of the first embodiment.
Fig. 11 is a block diagram illustrating a configuration of a production system according to a fourth modification of the first embodiment.
Fig. 12 is a block diagram illustrating a configuration of a production system according to a second embodiment.
Fig. 13 is a view illustrating an example of a GUI related to enable setting of an entry prohibited area displayed on a touch panel of a smartphone which is an example of the portable device of Fig. 12.
Fig. 14 is an external perspective view illustrating a road cone that is an example of the portable device in Fig. 12.
Fig. 15 is a block diagram illustrating a configuration of a production system according to a modification of the second embodiment.
Fig. 16 is a view illustrating a display of a smartphone that is an example of the portable device in Fig. 15.
Fig. 17 is a plan view illustrating the road cone, which is an example of the portable device in Fig. 15, viewed from each of a Y-axis direction and a Z-axis direction.
Fig. 18 is a block diagram illustrating a configuration of a control system according to a third embodiment.
Fig. 19 is a block diagram illustrating a hardware configuration example of an AR display device in Fig. 18.
Fig. 20 is a view illustrating an example of augmented reality displayed on the display in Fig. 19.
Fig. 21 is a block diagram illustrating a configuration of a production system according to a fourth embodiment.
Fig. 22 is a block diagram illustrating a hardware configuration example of a floor planning device in Fig. 21.
Fig. 23 is a view illustrating a GUI related to shape setting of an entry prohibited area displayed on a touch panel of the smartphone that is an example of a portable device of a production system according to a fifth embodiment.
Fig. 24 is an external perspective view illustrating the road cone that is an example of the portable device of the production system according to the fifth embodiment.
Fig. 25 is an enlarged view illustrating a setting dial in Fig. 24.
Fig. 26 is a view illustrating an example of an environment map in which the entry prohibited area is set based on setting in Figs. 23 and 25.
Fig. 27 is a view illustrating another example of the environment map in which the entry prohibited area is set based on the setting in Figs. 23 and 25.
Fig. 28 is a view illustrating a GUI related to setting of a group of portable devices forming the entry prohibited area displayed on the touch panel of the smartphone that is an example of a portable device of a production system according to a sixth embodiment.
Fig. 29 is a view illustrating the setting dial included in the road cone that is an example of the portable device of the production system according to the sixth embodiment.
Fig. 30 is a view illustrating an example of the environment map in which the entry prohibited area is set based on the settings in Figs. 28 and 29.
Fig. 31 is a block diagram illustrating a configuration of a production system according to a seventh embodiment.
Fig. 32 is a block diagram illustrating a hardware configuration example of a floor division device in Fig. 31.
Fig. 33 is a view illustrating an example of the environment map divided into a plurality of areas by the floor division device in Fig. 31.
Fig. 34 is a view illustrating the GUI related to update delay setting of the environment map displayed on the touch panel of the smartphone that is an example of a portable device of a production system according to an eighth embodiment.
Fig. 35 is a view illustrating a setting dial included in the road cone that is an example of the portable device of the production system according to the eighth embodiment.
Fig. 36 is a block diagram illustrating a configuration of a production system according to a ninth embodiment.
Fig. 37 is a view illustrating the GUI relating to the setting of an entry warning area displayed on the touch panel of the smartphone that is an example of the portable device in Fig. 36.
Fig. 38 is a view illustrating the setting dial included in the road cone that is an example of the portable device in Fig. 36.
Fig. 39 is a view illustrating an example of the environment map in which the entry warning area is based on the setting in Figs. 37 and 38.
Fig. 40 is a block diagram illustrating a configuration of a production system according to a tenth embodiment.
Fig. 41 is a view illustrating a plurality of GUIs displayed on the touch panel of the smartphone that is an example of the portable device in Fig. 40.
Fig. 42 is a view illustrating processing performed by each of the portable device, the server, and a moving mechanism when the entry prohibition setting is input to the portable device by a site worker in Fig. 40.
Fig. 43 is a view illustrating a flow of processing performed in the moving mechanism of Fig. 40.
Fig. 44 is a flowchart illustrating a specific processing flow of map update determination processing in Fig. 42.
Fig. 45 is a flowchart illustrating a specific processing flow of update processing of the environment map in Fig. 42.
Fig. 46 is a block diagram illustrating a configuration of a production system according to an eleventh embodiment.
Fig. 47 is a view illustrating an example of a correspondence table in Fig. 46.
Fig. 48 is a block diagram illustrating a configuration of a production system according to a twelfth embodiment.
Fig. 49 is a block diagram illustrating a configuration of a production system according to a thirteenth embodiment.
Fig. 50 is a view illustrating an example of information related to a code displayed on an operation unit in Fig. 49.
Fig. 51 is a view illustrating processing performed by each of a code reader, the server, and the moving mechanism when the entry prohibition setting is input to the code reader by the site worker in Fig. 49.

### DESCRIPTION OF THE PREFERRED EMBODIMENT

Hereinafter, an embodiment of the present invention will be described in detail with reference to the drawings. In the drawings, the same or corresponding part is denoted by the same reference numeral, and the description thereof will not generally be repeated.

### [First embodiment]

### <Application example>

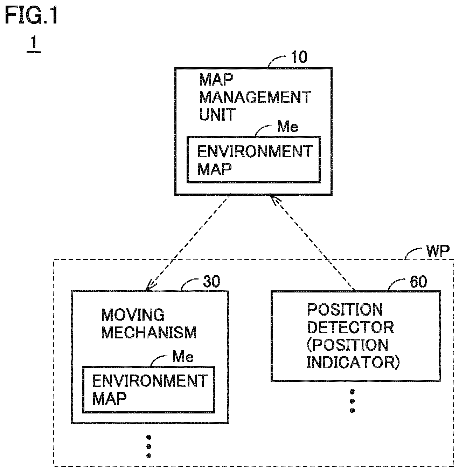

Fig. 1 is a block diagram illustrating a configuration of a production system 1 according to a first embodiment. As illustrated in Fig. 1, production system 1 includes a moving mechanism 30, a map management unit 10, and a position detector 60 (position indicator). Moving mechanism 30 moves in a workplace WP based on an environment map Me corresponding to workplace WP. Position detector 60 is disposed in workplace WP. Map management unit 10 manages environment map Me. Position detector 60 transmits information (for example, a coordinate) related to a current position (self-position) of position detector 60 to map management unit 10. Map management unit 10 specifies a current area including the current position of position detector 60 on environment map Me. Moving mechanism 30 moves in workplace WP while avoiding an entry prohibited area based on environment map Me in which the current area is set as the entry prohibited area based on the current position (state) of position detector 60.

### [First modification of first embodiment]

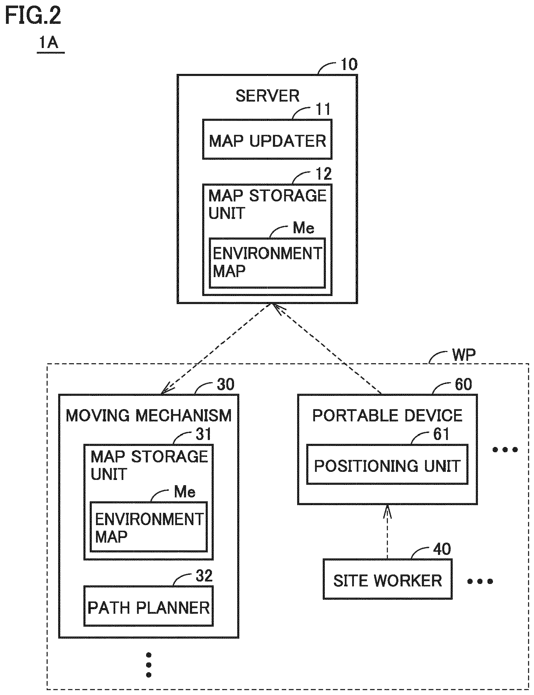

Fig. 2 is a block diagram illustrating a configuration of a production system 1A according to a modification of the first embodiment. In Fig. 2, map management unit 10 and position detector 60 in Fig. 1 are illustrated as a server 10 and a portable device 60, respectively.

As illustrated in Fig. 2, server 10 includes a map updater 11 and a map storage unit 12 in which environment map Me is stored. map updater 11 updates the entry prohibited area in environment map Me based on the current position of portable device 60, and transmits environment map Me to moving mechanism 30.

Portable device 60 includes a positioning unit 61. Positioning unit 61 measures the current position of portable device 60 using a radio wave such as Wi-Fi/5G, an ultrasonic wave, a geomagnetic, a camera, or a global positioning system (GPS) sensor, and transmits the measured current position to server 10. Portable device 60 is configured to be movable by a site worker 40 (user). Site worker 40 can set a periphery of portable device 60 as the entry prohibited area by moving portable device 60 to a place where entry of moving mechanism 30 is desired to be prohibited.

Moving mechanism 30 includes a map storage unit 31 and a path planner 32. Environment map Me transmitted from server 10 to moving mechanism 30 is stored in map storage unit 31. Path planner 32 recalculates a path of moving mechanism 30 in response to reception of environment map Me from server 10.

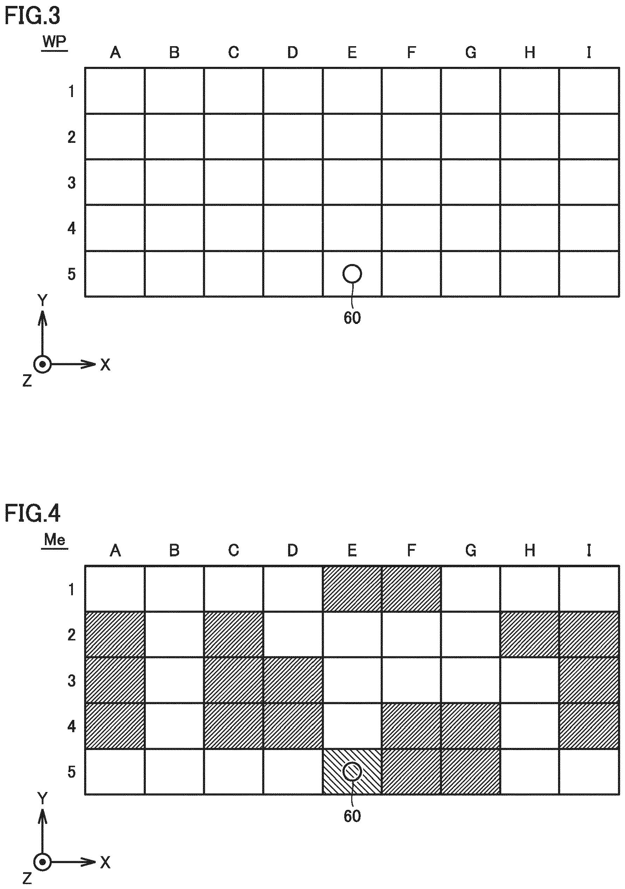

Fig. 3 is a view illustrating an example of workplace WP in Fig. 2 divided into a plurality of areas. In Fig. 3, an X-axis, a Y-axis, and a Z-axis are orthogonal to each other. The same applies to Figs. 4, 5, 17, 26, 27, 30, 33, and 39 described later.

As illustrated in Fig. 3, workplace WP is divided into a plurality of cells in a matrix (grid) of 9 columns and 5 rows. Workplace WP may not be expressed as the grid. Hereinafter, the cell of the X column and the Y row is expressed as a cell XY. Portable device 60 is disposed in a cell E5.

Fig. 4 is a view illustrating an example of environment map Me corresponding to workplace WP in Fig. 3. In Fig. 4, a cell (for example, cell A1) representing an accessible area into which moving mechanism 30 can enter is indicated in white (without hatching). A cell (for example, cell A2) representing an inaccessible area where moving mechanism 30 is inaccessible is indicated by darkest hatching. For example, the inaccessible cell includes a workbench, a crane, a cooperative robot, or a component placement site as an obstacle. The cell in the entry prohibited area is hatched thinner than hatching applied to the inaccessible area. As illustrated in Fig. 4, the entry prohibited area is a cell E5 including the current position of portable device 60.

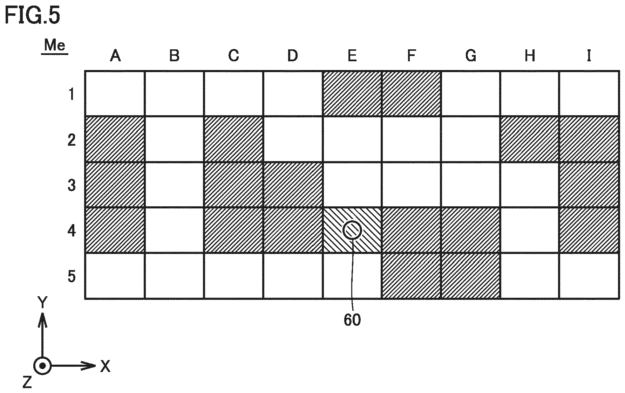

A state of workplace WP changes with lapse of time. In order to improve efficiency of the work performed in workplace WP where moving mechanism 30 moves, the entry prohibited area in workplace WP is required to be appropriately set according to the situation. Accordingly, in production system 1, the entry prohibited area in environment map Me is updated based on the current position of portable device 60. For example, when portable device 60 is moved from the position in cell E5 to the position in cell E4 by site worker 40, environment map Me is updated as illustrated in Fig. 5 by map updater 11 of server 10. According to production system 1, by moving portable device 60 according to the situation of workplace WP, a desired area of workplace WP can be automatically set as the entry prohibited area, and the entry prohibited area that does not need to be prohibited can be automatically changed to the accessible area. In addition, site worker 40 can know the area set as the entry prohibited area in real time by visually recognizing the current position of portable device 60.

When portable device 60 is moved in cell E5 by site worker 40 (when the cell including the current position of portable device 60 is not changed), the area in which the entry prohibited area is set in environment map Me is not changed even when the update processing of environment map Me is performed. For this reason, when the cell including the current position is not changed even when the current position of portable device 60 is moved, desirably the update processing of environment map Me is not performed in order to suppress a frequency of the update of environment map Me and the path calculation of moving mechanism 30. The frequency of the update of environment map Me and the path calculation of moving mechanism 30 are suppressed, so that costs of calculation resources of server 10 and moving mechanism 30 can be reduced.

### [Second modification of first embodiment]

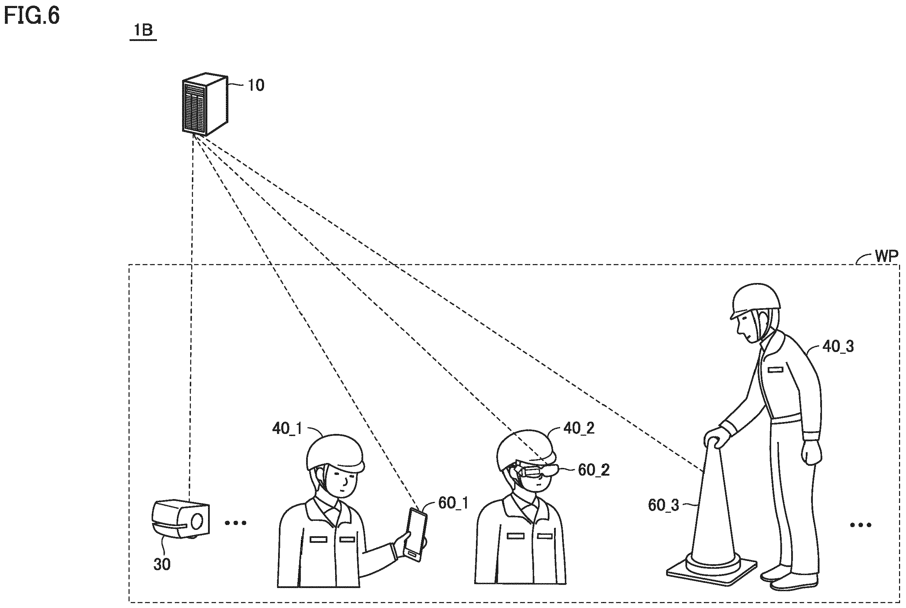

Fig. 6 is a block diagram illustrating a configuration of a production system 1B according to a second modification of the first embodiment. In Fig. 6, moving mechanism 30 in Fig. 2 is illustrated as an AMR (Autonomous Mobile Robot) 30. As illustrated in Fig. 6, a site worker 40_1 carries a smartphone 60_1. A site worker 40_2 wears a smart glasses 60_2. A site worker 40_3 carries a road cone (registered trademark) 60_3. Each of smartphone 60_1, smart glass 60_2, and road cone 60_3 in Fig. 6 corresponds to portable device 60 in Fig. 2.

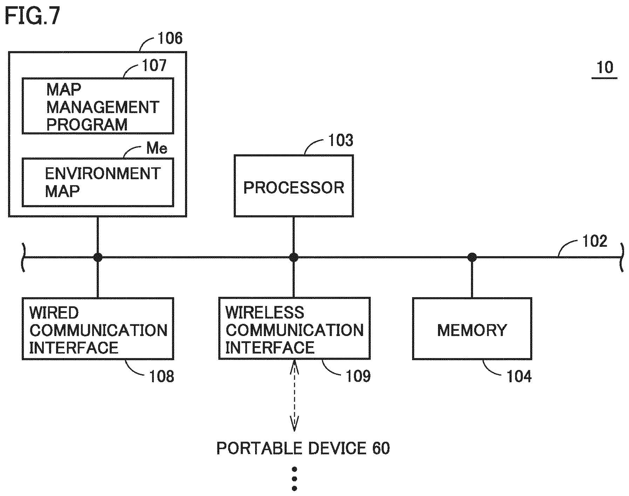

Fig. 7 is a block diagram illustrating a hardware configuration example of server 10 in Fig. 6. As illustrated in Fig. 7, server 10 includes a processor 103, a memory 104, a storage 106, a wired communication interface 108, and a wireless communication interface 109 as main components. These components included in server 10 are communicably connected to each other through an internal bus 102.

Processor 103 implements various pieces of processing by reading and executing various programs stored in storage 106. Memory 104 includes a volatile storage device such as a dynamic random access memory (DRAM) or a static random access memory (SRAM). Storage 106 stores an environment map Me and a map management program 107 managing environment map Me. Processor 103 that executes map management program 107 corresponds to map updater 11 in Fig. 2. Storage 106 corresponds to map storage unit 12 in Fig. 2.

Wired communication interface 108 controls data exchange through a wired network. Wireless communication interface 109 controls the data exchange through a wireless network. Specifically, wireless communication interface 109 controls the data exchange with each of a plurality of portable devices 60.

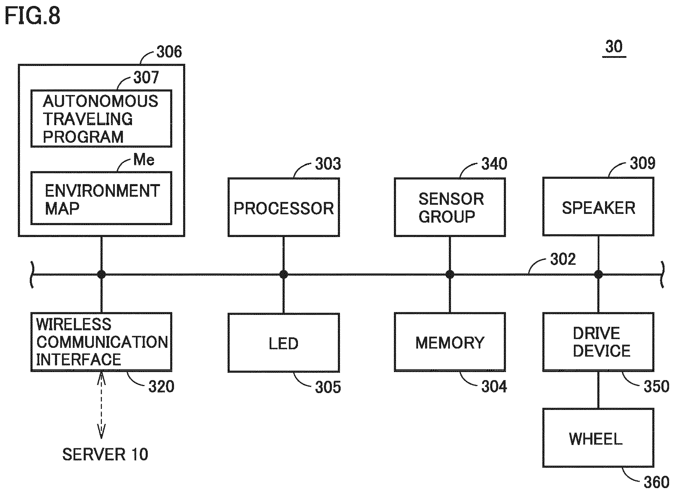

Fig. 8 is a block diagram illustrating a hardware configuration example of AMR 30 in Fig. 6. As illustrated in Fig. 8, AMR 30 includes a processor 303, a memory 304, a light emitting diode (LED) 305, a storage 306, a speaker 309, a wireless communication interface 320, a sensor group 340, a drive device 350, and wheels 360 as main components. These components included in AMR 30 are communicably connected to each other through an internal bus 302.

Processor 303 implements various pieces of processing by reading and executing various programs stored in storage 306. Memory 304 includes a volatile storage device such as the dynamic random access memory (DRAM) or the static random access memory (SRAM). Storage 306 stores an autonomous traveling program 307 performing autonomous traveling and a path design, and environment map Me. Processor 303 that executes autonomous traveling program 307 corresponds to path planner 32 in Fig. 2. Storage 306 corresponds to map storage unit 31 in Fig. 2.

Wireless communication interface 320 controls the data exchange through the wireless network. Specifically, wireless communication interface 320 controls the data exchange with server 10.

Sensor group 340 includes various sensors such as a sensor (for example, a laser scanner or a GPS sensor) identifying the current position of AMR 30, a laser sensor (distance sensor) or a camera detecting the obstacle or site worker 40 around AMR 30, or a contact sensor detecting contact with the object or site worker 40.

Drive device 350 is a device that drives wheels 360. Drive device 350 includes an actuator such as a motor.

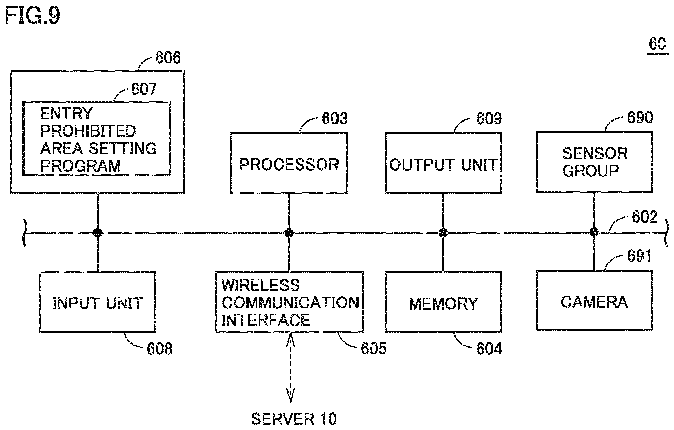

Fig. 9 is a block diagram illustrating a hardware configuration example of portable device 60 in Fig. 6. As illustrated in Fig. 9, portable device 60 includes a processor 603, a memory 604, a wireless communication interface 605, a storage 606, an input unit 608, an output unit 609, a sensor group 690, and a camera 691 as main components. These components included in portable device 60 are communicably connected to each other through an internal bus 602. Sensor group 690 corresponds to positioning unit 61 in Fig. 2.

Processor 603 implements various pieces of processing by reading and executing various programs stored in storage 606. Memory 604 includes a volatile storage device such as the DRAM or the SRAM. Storage 606 stores an entry prohibited area setting program 607 that transmits information (for example, the current position of portable device 60) required for the setting of the entry prohibited area to server 10.

Wireless communication interface 605 controls the data exchange through the wireless network. Specifically, wireless communication interface 605 controls the data exchange with server 10.

Input unit 608 receives input from the user to the program. For example, input unit 608 includes a touch panel, a button, a microphone, or a switch.

Output unit 609 outputs the execution result of the program to the user. For example, output unit 609 includes a display (display unit), a speaker, or a lamp.

Sensor group 690 includes a plurality of sensors (for example, a GPS sensor, an acceleration sensor, and a geomagnetic sensor) that acquire information in order to specify the current position of portable device 60. Camera 691 acquires a video that enters the field of view from portable device 60. The current position of portable device 60 may be detected by the distance sensor or the camera of AMR 30.

### [Third modification of first embodiment]

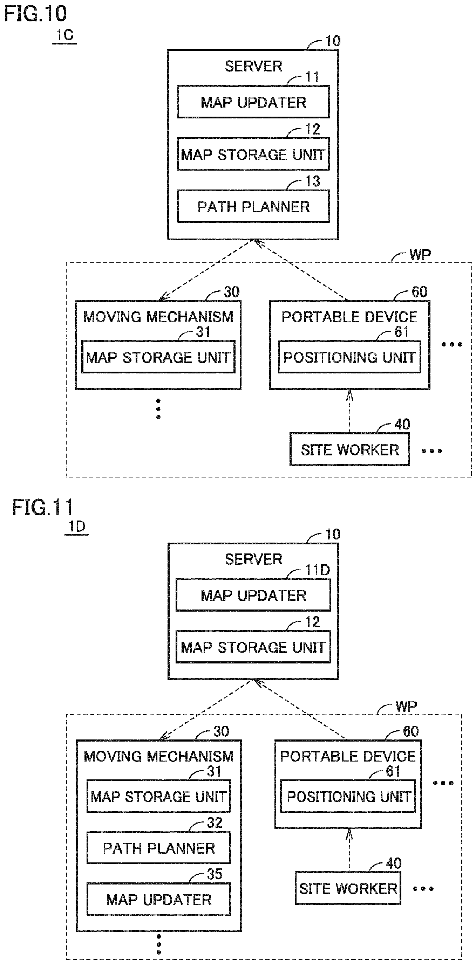

Fig. 10 is a block diagram illustrating a configuration of a production system 1C according to a third modification of the first embodiment. Production system 1C has a configuration in which path planner 32 is excluded from moving mechanism 30 in Fig. 2 while a path planner 13 is added to server 10. Because other configurations are similar to production system 1A, the description of the similar configurations will not be repeated.

As illustrated in Fig. 10, path planner 13 calculates the path of moving mechanism 30 based on environment map Me and transmits the path to moving mechanism 30. Moving mechanism 30 moves along the path received from server 10.

According to production system 1C, a calculation load of moving mechanism 30 can be reduced. The specification of the calculation resource such as the processor of moving mechanism 30 can be made relatively low, so that power consumption and heat generation of moving mechanism 30 can be suppressed. Any one of production systems 1A, 1C can be appropriately selected according to the number of moving mechanisms 30 included in the production system, the calculation resource of server 10, and the like.

### (Fourth modification of first embodiment)

Fig. 11 is a block diagram illustrating a configuration of a production system 1D according to a fourth modification of the first embodiment. Production system 1D has a configuration in which map updater 11 in Fig. 2 is replaced with 11D while a map updater 35 is added to moving mechanism 30. Because other configurations are similar to production system 1A, the description of the similar configurations will not be repeated.

As illustrated in Fig. 11, map updater 11D acquires a difference between the environment map before update and the environment map after update at current update timing, and transmits information about the difference to moving mechanism 30. Assuming that the environment map before the update is environment map Me in Fig. 4 and the environment map after the update is environment map Me in Fig. 5, the information related to the difference between the environment map and the environment map includes that cell E5 is the accessible area while cell E4 is the entry prohibited area. map updater 35 updates the environment map based on the information related to the difference from server 10.

According to production system 1D, not all the data of the updated environment map but the information related to the difference before and after the update of the environment map is transmitted from server 10 to moving mechanism 30. Consequently, a communication amount between server 10 and moving mechanism 30 accompanying the update of the environment map can be reduced. Any one of production systems 1A, 1D can be appropriately selected according to the calculation resource of moving mechanism 30 and the allowable communication amount or communication delay.

As described above, according to the system, the method, and the program according to the first embodiment and the first to fourth modifications, the efficiency of the work performed at the workplace where the moving mechanism moves can be improved.

### [Second embodiment]

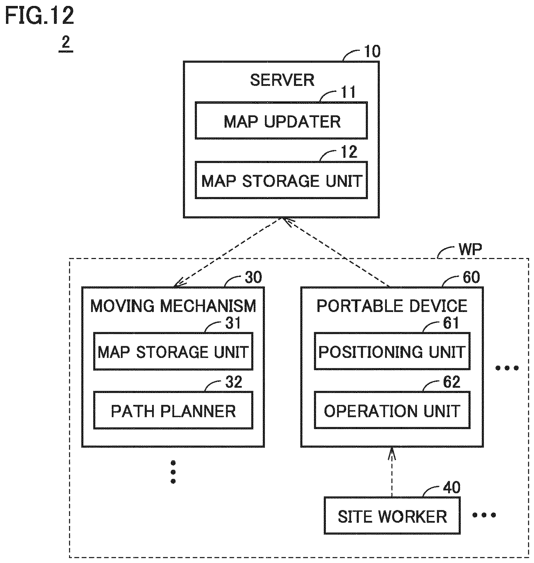

Fig. 12 is a block diagram illustrating a configuration of a production system 2 according to a second embodiment. Production system 2 has a configuration in which an operation unit 62 is added to portable device 60 in Fig. 2. Because other configurations are similar to production system 1A, the description of the similar configurations will not be repeated. Operation unit 62 includes input unit 608 in Fig. 9. Site worker 40 can change the setting related to the entry prohibited area from portable device 60 by the input to operation unit 62.

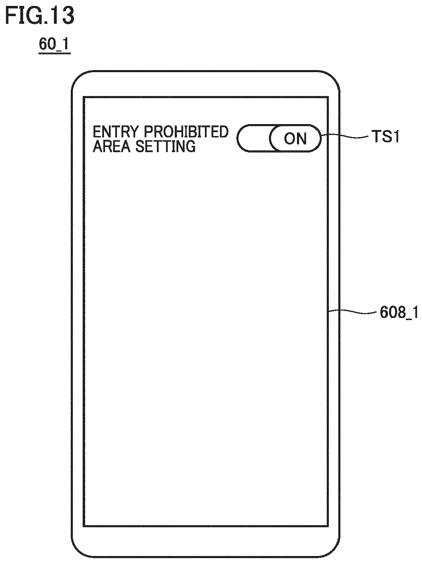

Fig. 13 is a view illustrating an example of a graphical user interface (GUI) related to enable setting of an entry prohibited area displayed on a touch panel 608_1 of smartphone 60_1 that is an example of portable device 60 in Fig. 12. Touch panel 608_1 is included in operation unit 62 in Fig. 12. As illustrated in Fig. 13, a toggle switch TS1 is displayed on touch panel 608_1. Site worker 40 can switch ON/OFF of toggle switch TS1 by tapping on touch panel 608_1. Smartphone 60_1 transmits the current position of smartphone 60_1 to server 10 when toggle switch TS1 is ON, and does not transmit the current position of smartphone 60_1 to server 10 when toggle switch TS1 is OFF. That is, server 10 sets the area including the current position of smartphone 60_1 as the entry prohibited area when toggle switch TS1 is ON, and does not set the area including the current position as the entry prohibited area when toggle switch TS1 is OFF.

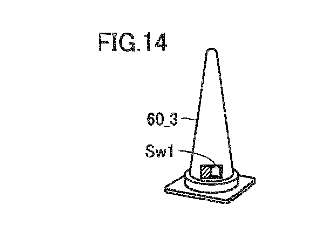

Fig. 14 is an external perspective view illustrating road cone 60_3 that is an example of portable device 60 in Fig. 12. As illustrated in Fig. 14, road cone 60_3 includes a switch Sw1. Switch Sw1 is included in operation unit 62 in Fig. 12. Site worker 40 carrying smartphone 60_1 can switch ON/OFF of switch Sw1. road cone 60_3 transmits the current position of road cone 60_3 to server 10 when switch Sw1 is ON, and does not transmit the current position of road cone 60_3 to server 10 when switch Sw1 is OFF. That is, server 10 sets the area including the current position of road cone 60_3 as the entry prohibited area when switch Sw1 is ON, and does not set the area including the current position as the entry prohibited area when switch Sw1 is OFF.

According to production system 2, when site worker 40 does not want to set the area including the current position of portable device 60 as the entry prohibited area, for example, when portable device 60 is being moved, the change in the setting related to the entry prohibited area through operation unit 62 of portable device 60 can prevent an unintended entry prohibited area from being set as workplace WP.

### [Modification of second embodiment]

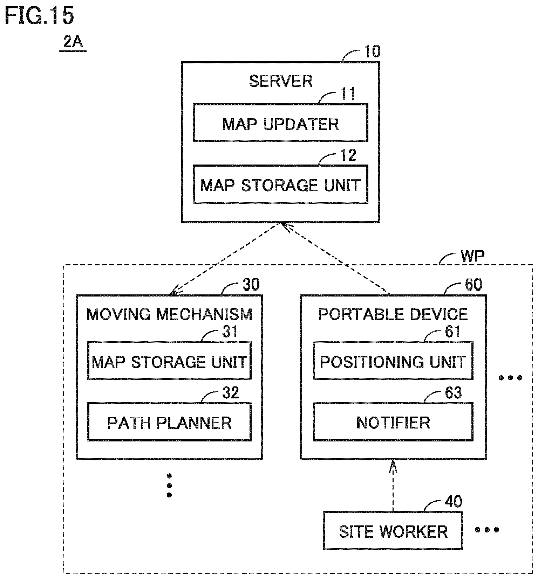

Fig. 15 is a block diagram illustrating a configuration of a production system 2A according to a modification of the second embodiment. Production system 2 has a configuration in which operation unit 62 in Fig. 12 is removed and a notifier 63 is added. Because other configurations are similar to production system 2, the description of the similar configurations will not be repeated. notifier 63 includes output unit 609 in Fig. 9. Site worker 40 can know the entry prohibited area set in workplace WP through notifier 63.

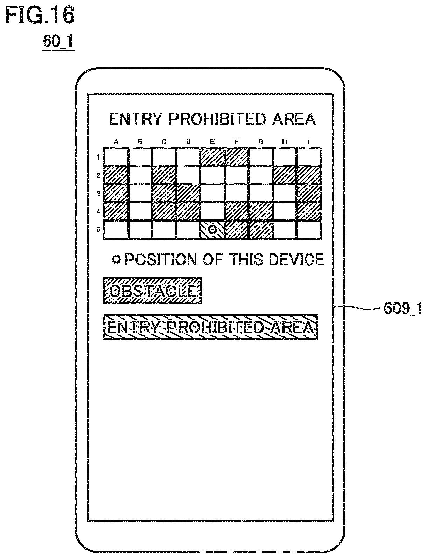

Fig. 16 is a view illustrating a display 609_1 of smartphone 60_1 that is an example of portable device 60 in Fig. 15. Display 609_1 corresponds to notifier 63 in Fig. 15. As illustrated in Fig. 16, environment map Me in Fig. 5 is displayed on display 609_1. Site worker 40 carrying smartphone 60_1 can check the entry prohibited area set in workplace WP in real time in workplace WP through display 609_1.

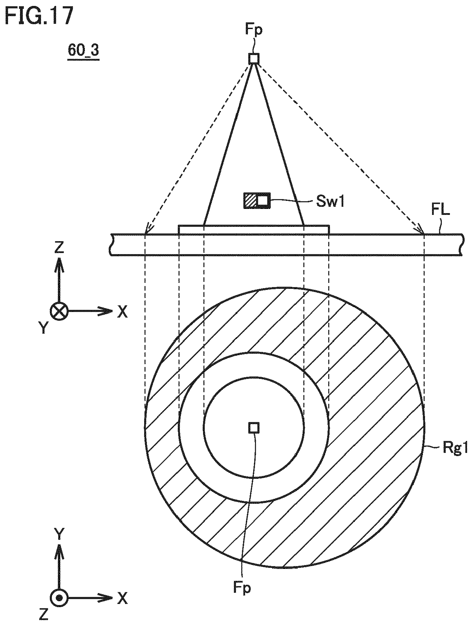

Fig. 17 is a plan view illustrating road cone 60_3, which is an example of portable device 60 in Fig. 15, viewed from each of a Y-axis direction and a Z-axis direction. As illustrated in Fig. 17, road cone 60_3 further includes a projector Fp. Projector Fp corresponds to notifier 63 in Fig. 15. Projector Fp illuminates a peripheral region Rg1 of road cone 60 _ 3 on floor FL. When visually recognizing that peripheral region Rg1 of road cone 60_3, site worker 40 can know in real time at workplace WP that the periphery of road cone 60_3 in workplace WP is set as the entry prohibited area.

As described above, according to the system, the method, and the program of the second embodiment and the modification, the efficiency of the work performed at the workplace where the moving mechanism moves can be improved.

### [Third embodiment]

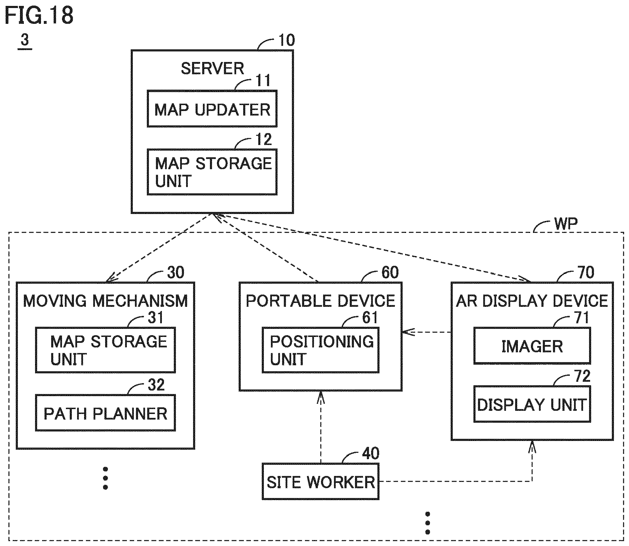

Fig. 18 is a block diagram illustrating a configuration of a production system 3 according to a third embodiment. The configuration of production system 3 is a configuration in which an augmented reality (AR) display device (augmented reality display unit) 70 is added to production system 1A in Fig. 2. Because other configurations are similar to production system 1A, the description of the similar configurations will not be repeated.

As illustrated in Fig. 18, AR display device 70 includes an imager 71 and a display unit 72. AR display device 70 is configured to be portable by site worker 40, and for example, is a smartphone or smart glasses. AR display device 70 superimposes and displays an image indicating the entry prohibited area around portable device 60 captured by imager 71.

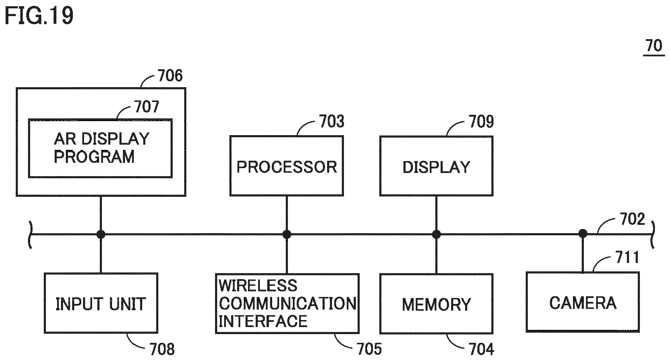

Fig. 19 is a block diagram illustrating a hardware configuration example of AR display device 70 in Fig. 18. As illustrated in Fig. 19, AR display device 70 includes a processor 703, a memory 704, a wireless communication interface 705, a storage 706, an input unit 708, a display 709, and a camera 711 as main components. These components included in AR display device 70 are communicably connected to each other through an internal bus 702. Display 709 and camera 711 correspond to display unit 72 and imager 71 in Fig. 18, respectively.

Processor 703 implements various pieces of processing by reading and executing various programs stored in storage 706. Memory 704 includes a volatile storage device such as the DRAM or the SRAM. Storage 706 stores an AR display program 707 that superimposes and displays a computer graphics (CG) image indicating the entry prohibited area around portable device 60 captured by camera 711.

Wireless communication interface 705 controls the data exchange through the wireless network. Input unit 708 receives the input from the user to the program. For example, input unit 708 includes a touch panel, a button, a microphone, or a switch. Display 709 displays the execution result of the program.

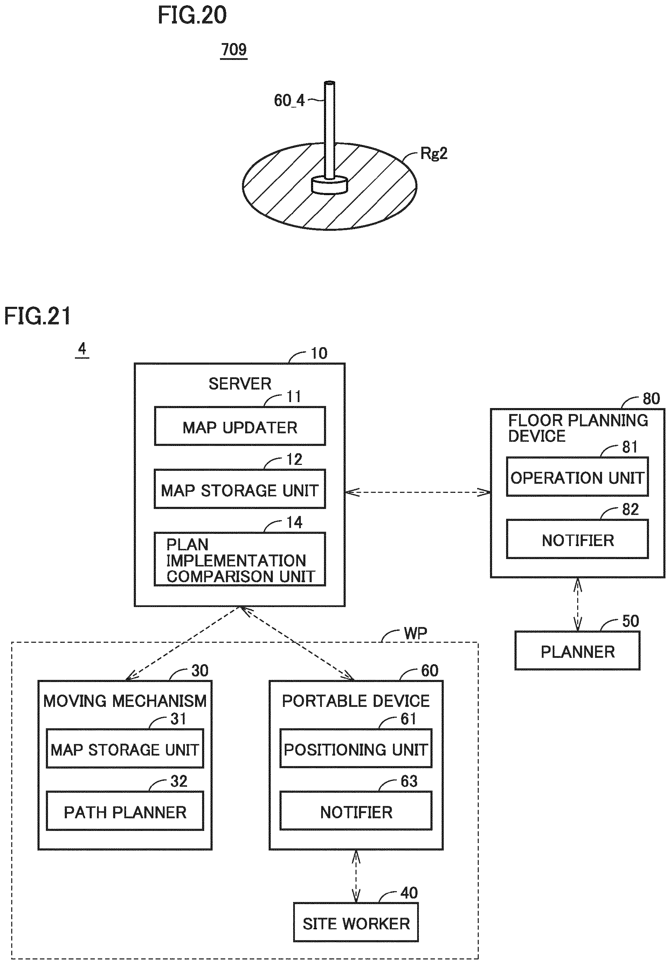

Fig. 20 is a view illustrating an example of augmented reality displayed on display 709 in Fig. 19. As illustrated in Fig. 20, on display 709, a CG image Rg2 representing the entry prohibited area is superimposed and displayed around the image of a pole 60_4, which is an example of portable device 60, captured by camera 711. When viewing display 709, site worker 40 can check in real time in workplace WP that the periphery of pole 60_4 disposed in workplace WP is set to the entry prohibited area. In addition, the notifier that notifies site worker 40 that portable device 60 is in the entry prohibited area is unnecessary, so that portable device 60 can have a simple configuration.

As described above, according to the system, the method, and the program of the third embodiment, the efficiency of the work performed at the workplace where the moving mechanism moves can be improved.

### [Fourth embodiment]

Fig. 21 is a block diagram illustrating a configuration of a production system 4 according to a fourth embodiment. The configuration of production system 4 is a configuration in which a floor planning device 80 (area planner) is added to production system 2A in Fig. 15 while a plan implementation comparison unit 14 is added to server 10. Because other configurations are similar to production system 2A, the description of the similar configurations will not be repeated.

As illustrated in Fig. 21, floor planning device 80 includes an operation unit 81 and a notifier 82. For example, floor planning device 80 includes a tablet computer, a notebook computer, or a desktop computer. A planner 50 previously plans the entry prohibited area in the environment map through operation unit 81. Floor planning device 80 transmits information related to the planning of the entry prohibited area to server 10. When the plan of the entry prohibited area is not matched with the setting of the entry prohibited area by site worker 40 (for example, when the remaining battery capacity of portable device 60 is zero, or when the entry prohibited area setting is OFF), plan implementation comparison unit 14 transmits information related to a difference (deviation) between the plan of the entry prohibited area and the setting of the entry prohibited area to each of portable device 60 and floor planning device 80.
notifier 63 of portable device 60 notifies site worker 40 that the setting of the entry prohibited area by site worker 40 is not matched with the plan of the entry prohibited area by planner 50. notifier 82 of floor planning device 80 notifies planner 50 that the plan of the entry prohibited area by planner 50 is not matched with the setting of the entry prohibited area by site worker 40. For example, each of notifiers 63, 82 outputs a mismatch between the plan of the entry prohibited area and the actual setting of the entry prohibited area by a lighting pattern of the LED, a lighting color of the LED, message display on the display, sound, or vibration. According to production system 4, the collation result between the plan and the setting (achievement) of the entry prohibited area is notified to site worker 40 and planner 50 in real time, the plan or the setting of the entry prohibited area can be promptly corrected.

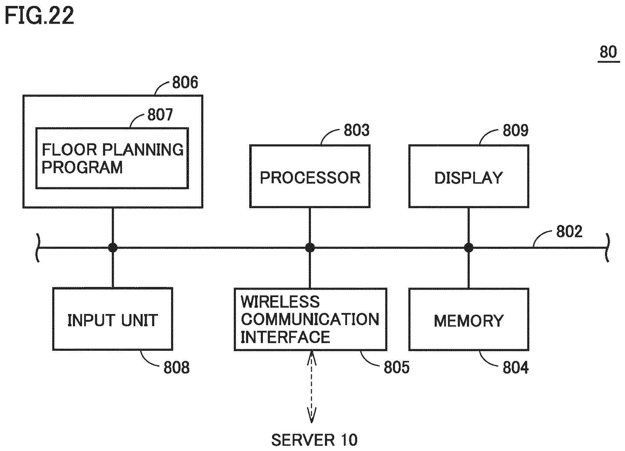

Fig. 22 is a block diagram illustrating a hardware configuration example of floor planning device 80 in Fig. 21. As illustrated in Fig. 22, floor planning device 80 includes a processor 803, a memory 804, a wireless communication interface 805, a storage 806, an input unit 808, and a display 809 as main components. These components included in floor planning device 80 are communicably connected to each other through an internal bus 802. Input unit 808 and display 809 correspond to operation unit 81 and notifier 82 in Fig. 21, respectively.

Processor 803 implements various pieces of processing by reading and executing various programs stored in storage 806. Memory 804 includes a volatile storage device such as the DRAM or the SRAM. A floor planning program 807 that previously plans the entry prohibited area in the environment map is stored in storage 806.

Wireless communication interface 805 controls the data exchange through the wireless network. Specifically, wireless communication interface 805 controls the data exchange with server 10.

Input unit 808 receives the input from the user to the program. For example, input unit 808 includes a touch panel, a button, a microphone, or a switch. Display 809 displays the execution result of the program.

As described above, according to the system, the method, and the program according to the fourth embodiment, the efficiency of the work performed at the workplace where the moving mechanism moves can be improved.

### [Fifth embodiment]

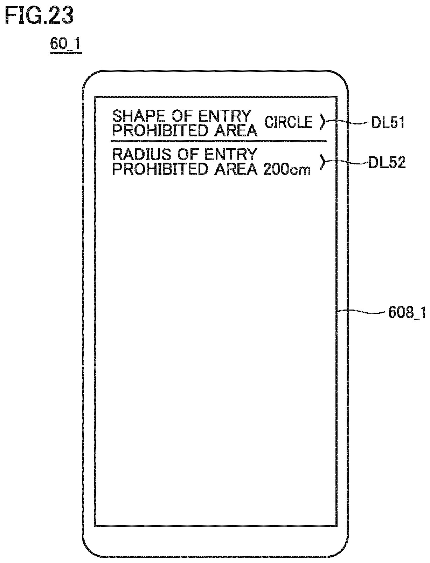

Fig. 23 is a view illustrating a GUI related to shape setting of an entry prohibited area displayed on touch panel 608_1 of smartphone 60_1 that is an example of portable device 60 of a production system according to a fifth embodiment. Because the configuration of the production system of the fifth embodiment is similar to production system 2 in Fig. 12, the description of the system configuration will not be repeated.

As illustrated in Fig. 23, drop-down lists DL51, DL52 are displayed on touch panel 608_1. Site worker 40 can set the shape of the entry prohibited area by selecting a desired shape from a plurality of shapes (for example, circular, square, and square (alignment)) displayed by tapping drop-down list DL51. Site worker 40 can set a radius of the shape of the entry prohibited area by selecting a desired radius from a plurality of radii (for example, 100 cm, 120 cm, 150 cm, 200 cm, 250 cm, 300 cm, 400 cm, and 500 cm) displayed by tapping drop-down list DL52. The radius of the square is the radius of the circumscribed circle of the square. Smartphone 60_1 transmits the shape and radius of the entry prohibited area set by site worker 40 to server 10. Server 10 sets the entry prohibited area having the shape and the radius centered on the current position of smartphone 60_1 to environment map Me.

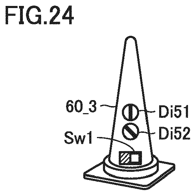

Fig. 24 is an external perspective view illustrating road cone 60_3 that is an example of portable device 60 of the production system according to the fifth embodiment. Road cone 60_3 further includes setting dials Di51, Di52 in addition to switch Sw1. Setting dials Di51, Di52 are included in operation unit 62 of the production system of the fifth embodiment.

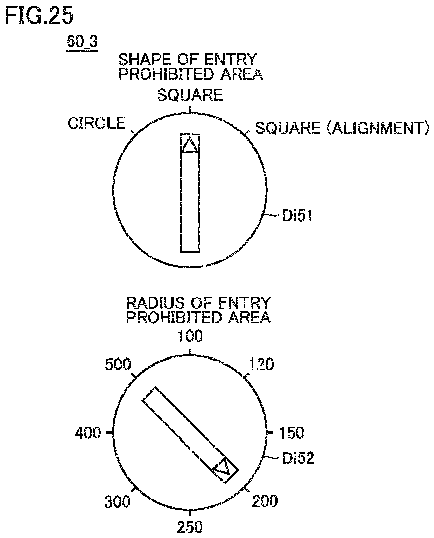

Fig. 25 is an enlarged view illustrating setting dials Di51, Di52 in Fig. 24. As illustrated in Fig. 25, site worker 40 can set the shape of the entry prohibited area by rotating setting dial Di51 and selecting a desired shape from a plurality of shapes. When setting dial Di52 is rotated to select a desired radius from a plurality of radii, site worker 40 can set the radius of the shape of the entry prohibited area. Road cone 60_3 transmits the shape and radius of the entry prohibited area set by site worker 40 to server 10. Server 10 sets the entry prohibited area having the shape and the radius centered on the current position of road cone 60_3 in environment map Me.

When the square is selected as the shape of the entry prohibited area, orientation of portable device 60 is detected by the acceleration sensor and the geomagnetic sensor, and portable device 60 transmits the orientation to server 10. Server 10 rotates the square of the entry prohibited area about the current position of portable device 60 based on the orientation of portable device 60. On the other hand, when the square (alignment) is selected as the shape of the entry prohibited area, portable device 60 does not transmit the orientation of portable device 60 to server 10. Server 10 designates the square along the boundary of the grid as the entry prohibited area.

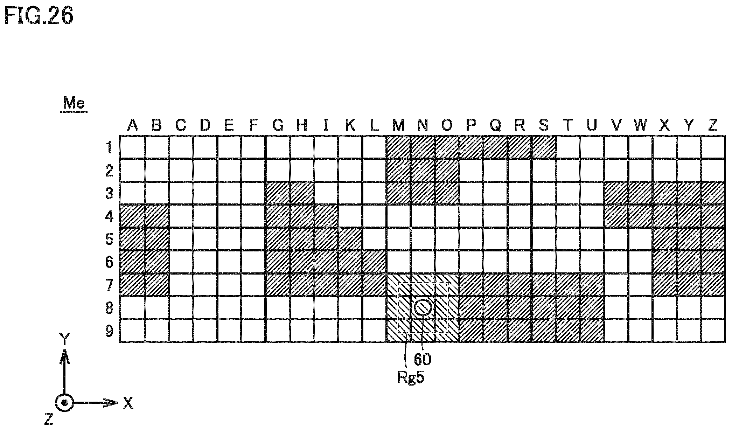

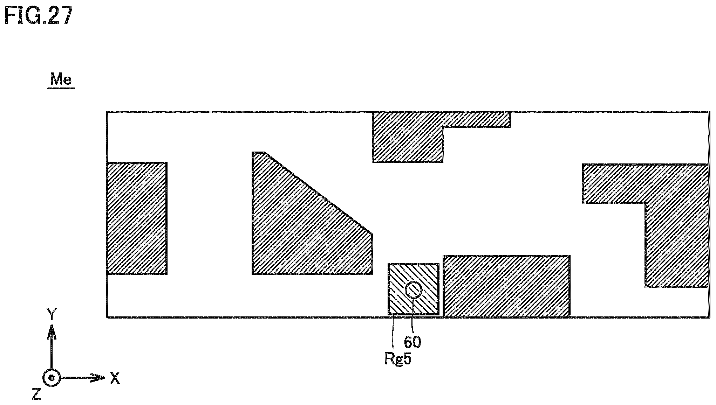

Fig. 26 is a view illustrating an example of environment map Me in which the entry prohibited area is set based on the settings in Figs. 23 and 25. In Fig. 26, a region Rg5 is the square having the radius of 200 cm centered on the current position of portable device 60, and corresponds to the setting in Figs. 23 and 25. The same applies to Fig. 27 described later.

As illustrated in Fig. 26, environment map Me is expressed as the grid. The current position of portable device 60 is included in a cell N8. Server 10 sets a cell overlapping region Rg5 as the entry prohibited area. In Fig. 26, cells M7, N7, O7, M8, N8, O8, M9, N9, O9 are set as the entry prohibited areas.

Fig. 27 is a view illustrating another example of environment map Me in which the entry prohibited area is set based on the setting in Figs. 23 and 25. In the example of Fig. 27, environment map Me is not expressed as the grid. As illustrated in Fig. 27, region Rg5 is set as the entry prohibited area as it is.

According to the production system of the fifth embodiment, site worker 40 can designate the shape and size of the entry prohibited area according to the space required for the work.

As described above, according to the system, the method, and the program of the fifth embodiment, the efficiency of the work performed at the workplace where the moving mechanism moves can be improved.

### [Sixth embodiment]

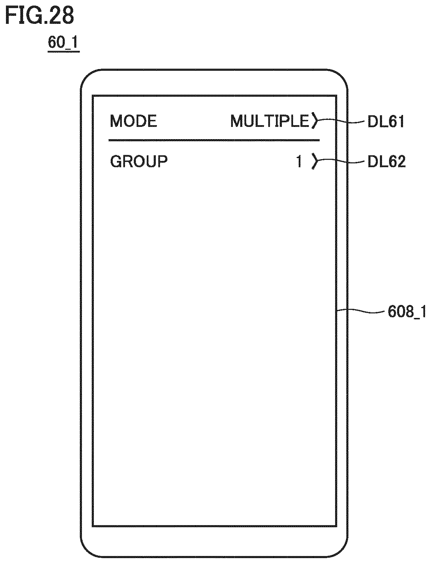

Fig. 28 is a view illustrating a GUI related to setting of a group of portable devices 60 forming the entry prohibited area displayed on touch panel 608_1 of smartphone 60_1 that is an example of portable device 60 of a production system according to a sixth embodiment. Because the configuration of the production system of the sixth embodiment is similar to production system 2 in Fig. 12, the description of the system configuration will not be repeated.

As illustrated in Fig. 28, drop-down lists DL61, DL62 are displayed on touch panel 608_1. Site worker 40 can select a desired setting mode from a plurality of setting modes (for example, a single mode and a multiple mode) displayed by tapping drop-down list DL61. Site worker 40 can select a desired group number from the group numbers displayed by tapping drop-down list DL62. Smartphone 60_1 transmits the setting mode and the group number set by site worker 40 to server 10. When the setting mode is the single mode, server 10 sets one area including the current position of smartphone 60_1 or the area having the shape centered on the current position as the entry prohibited area. When the selected mode is the plurality of modes, server 10 sets the area including the current position of each of smartphone 60_1 and another portable device 60 to which the same group number as that of smartphone 60_1 is set as the entry prohibited area.

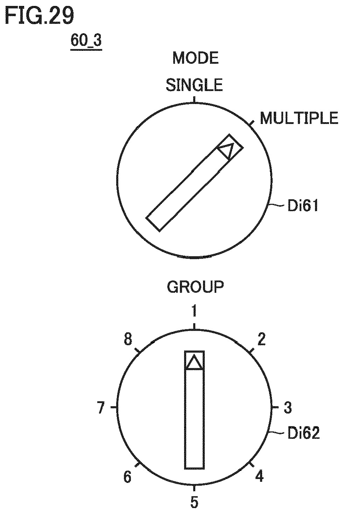

Fig. 29 is a view illustrating setting dials Di61, Di62 included in road cone 60_3 that is an example of portable device 60 of the production system according to the sixth embodiment. Setting dials Di61, Di62 are included in operation unit 62 of the production system of the sixth embodiment. As illustrated in Fig. 29, site worker 40 can select a desired setting mode from the single mode and the plurality of modes by rotating setting dial Di61. Site worker 40 can set a desired group number by rotating setting dial Di62. road cone 60_3 transmits the setting mode and the group number set by site worker 40 to server 10. When the setting mode is the single mode, server 10 sets one area including the current position of road cone 60_3 or the area having the shape centered on the current position as the entry prohibited area. When the selection mode is a plurality of modes, server 10 sets the area including the current position of each of road cone 60_3 and other portable devices 60 to which the same group number as that of road cone 60 _ 3 is set as the entry prohibited area.

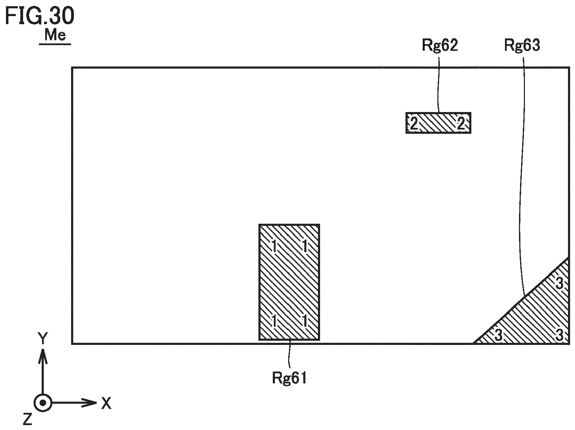

Fig. 30 is a view illustrating an example of environment map Me in which the entry prohibited area is set based on the settings in Figs. 28 and 29. As illustrated in Fig. 30, each of regions Rg61, Rg62, Rg63 is set as the entry prohibited area. Region Rg61 is the rectangular entry prohibited area including the current position of each of four portable devices 60 having the group number of 1 in the vicinity of a vertex. Region Rg61 is the entry prohibited area surrounded by four portable devices 60. Region Rg62 is the rectangular entry prohibited area including the current position of each of two portable devices 60 having the group number of 2. Region Rg62 is the entry prohibited area sandwiched between two portable devices 60. Region Rg63 is the triangular entry prohibited area including the current position of each of three portable devices 60 having the group number of 3 in the vicinity of the vertex. Region Rg63 is the entry prohibited area surrounded by three portable devices 60.

According to the production system of the sixth embodiment, site worker 40 can set the entry prohibited area having the desired shape and orientation according to the situation of the workplace. In addition, the entry prohibited area can be expanded by increasing the interval between the plurality of portable devices 60 without changing the number of the plurality of portable devices 60, so that the number of portable devices 60 required to form the entry prohibited area can be reduced.

As described above, according to the system, the method, and the program of the sixth embodiment, the efficiency of the work performed at the workplace where the moving mechanism moves can be improved.

### [Seventh embodiment]

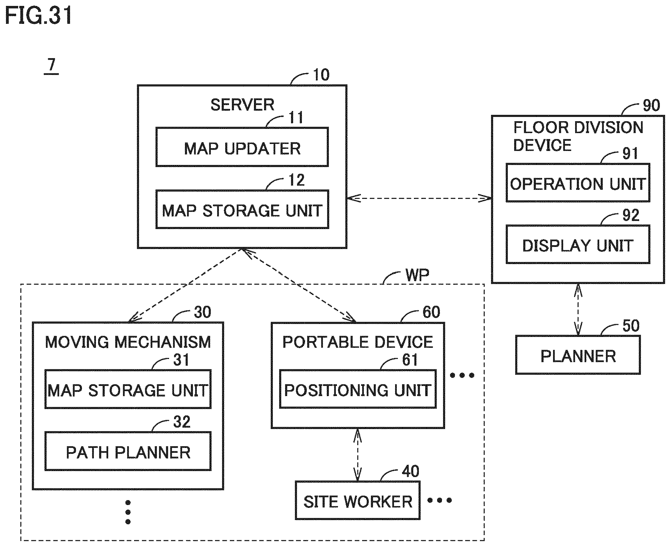

Fig. 31 is a block diagram illustrating a configuration of a production system 7 according to a seventh embodiment. Production system 7 has a configuration in which a floor division device 90 is added to production system 1A in Fig. 2. Because other configurations are similar to production system 1A, the description of the similar configurations will not be repeated.

As illustrated in Fig. 31, floor division device 90 (area divider) includes an operation unit 91 and a display unit 92. For example, floor division device 90 is a tablet, a notebook computer, or a desktop computer. Planner 50 divides environment map Me corresponding to the workplace displayed on display unit 92 into a plurality of desired areas through operation unit 91. Floor division device 90 transmits information related to the division of workplace WP to server 10. Server 10 divides environment map Me into a plurality of areas based on the information related to the division of workplace WP.

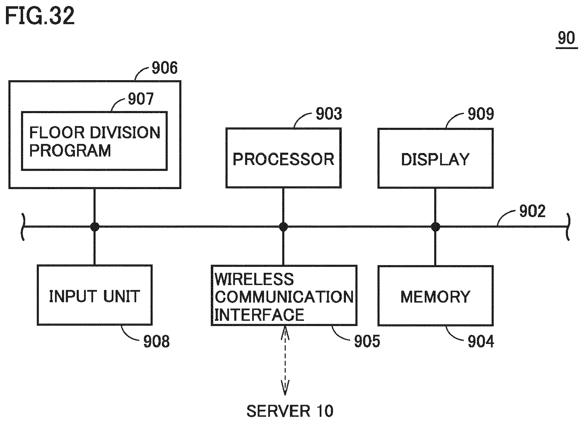

Fig. 32 is a block diagram illustrating a hardware configuration example of a floor division device 90 in Fig. 31. As illustrated in Fig. 32, floor division device 90 includes a processor 903, a memory 904, a wireless communication interface 905, a storage 906, an input unit 908, and a display 909 as main components. These components included in floor division device 90 are communicably connected to each other through an internal bus 902. Input unit 908 and display 909 correspond to operation unit 81 and notifier 82 in Fig. 21, respectively.

Processor 903 implements various pieces of processing by reading and executing various programs stored in storage 906. Memory 904 includes a volatile storage device such as the DRAM or the SRAM. Storage 906 stores a floor division program 907 that divides environment map Me corresponding to the workplace into the plurality of areas.

Wireless communication interface 905 controls the data exchange through the wireless network. Specifically, wireless communication interface 905 controls the data exchange with server 10.

Input unit 908 receives the input from the user to the program. For example, input unit 908 includes a touch panel, a button, a microphone, or a switch. Display 909 displays an execution result of the program.

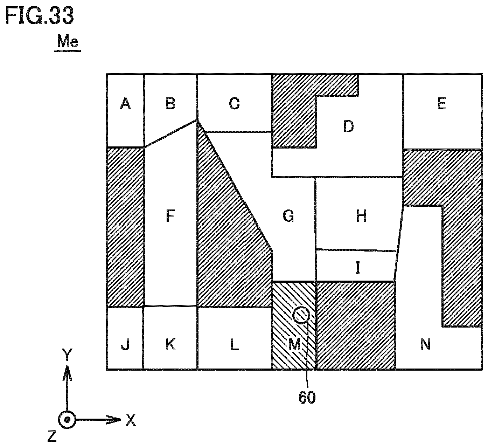

Fig. 33 is a view illustrating an example of environment map Me divided into the plurality of areas by floor division device 90 in Fig. 31. As illustrated in Fig. 33, environment map Me is divided into non-uniform areas A to N. Because the current position of portable device 60 is included in an area M, the area M is set as the entry prohibited area.

According to production system 7, workplace WP can be divided in a manner desired by planner 50. For example, planner 50 can set the entry prohibited area in the range corresponding to recognition and intuition of workplace WP of site worker 40 rather than the setting of the entry prohibited area by a coordinate or a symbol by dividing workplace WP for each easily verbalized range such as "the back side of the device".

As described above, according to the system, the method, and the program of the seventh embodiment, the efficiency of the work performed at the workplace where the moving mechanism moves can be improved.

### [Eighth embodiment]

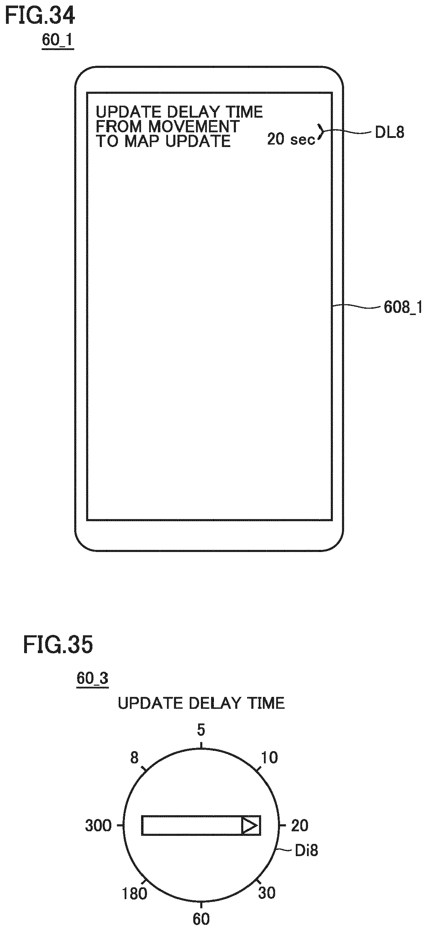

Fig. 34 is a view illustrating the GUI related to update delay setting of environment map Me displayed on touch panel 608_1 of smartphone 60_1 that is an example of portable device 60 of a production system according to an eighth embodiment. Because the configuration of the production system of the eighth embodiment is similar to production system 2 in Fig. 12, the description of the system configuration will not be repeated.

As illustrated in Fig. 34, a drop-down list DL8 is displayed on touch panel 608_1. Site worker 40 can set a desired delay time (update delay time) from the movement of smartphone 60_1 to the update of environment map Me from among a plurality of delay times displayed by tapping drop-down list DL8. Smartphone 60_1 transmits the update time set by site worker 40 to server 10. When detecting that smartphone 60_1 moves from the position of smartphone 60_1 at the update timing of previous environment map Me, server 10 updates environment map Me when the current area including the current position of smartphone 60_1 does not change during the update delay time after detecting the movement of smartphone 60_1.

Fig. 35 is a view illustrating a setting dial Di8 included in road cone 60_3 that is an example of portable device 60 of the production system according to the eighth embodiment. Setting dial Di8 is included in operation unit 62 of the production system of the eighth embodiment. As illustrated in Fig. 35, site worker 40 can select a desired update delay time by rotating setting dial Di8. Site worker 40 can set a desired update delay time by rotating setting dial Di8. Road cone 60_3 transmits the update delay time set by site worker 40 to server 10. When detecting that road cone 60_3 moves from the position of road cone 60_3 at the update timing of previous environment map Me, server 10 updates environment map Me when the current area including the current position of road cone 60_3 does not change during the update delay time after detecting the movement of road cone 60_3.

According to the production system of the eighth embodiment, even when the movement of portable device 60 is detected by server 10, environment map Me is not updated during the update delay time. Environment map Me is prevented from being continuously updated while portable device 60 is moved by site worker 40, so that the costs of the calculation resources of server 10 and moving mechanism 30 can be reduced.

As described above, according to the system, the method, and the program of the eighth embodiment, the efficiency of the work performed at the workplace where the moving mechanism moves can be improved.

### [Ninth embodiment]

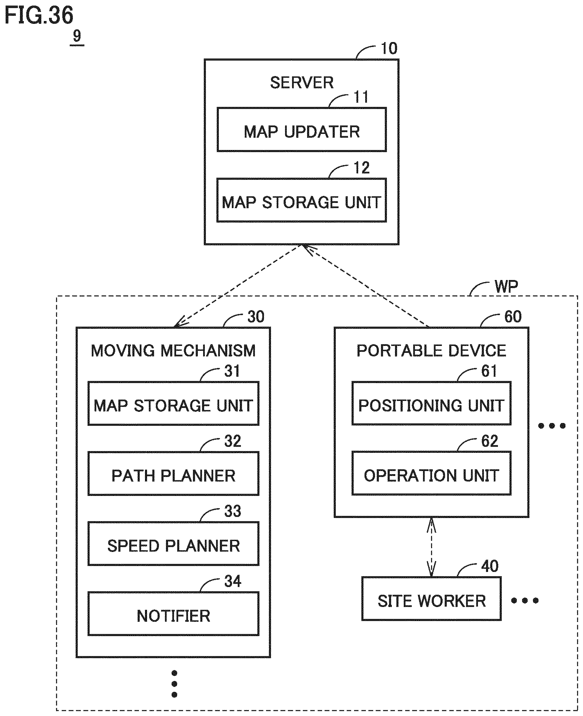

Fig. 36 is a block diagram illustrating a configuration of a production system 9 according to a ninth embodiment. Production system 9 has a configuration in which a speed planner 33 and a notifier 34 are added to moving mechanism 30 in Fig. 12. Site worker 40 can set an entry warning area around the entry prohibited area in addition to the entry prohibited area through operation unit 62 of portable device 60. Because other configurations are similar to production system 2, the description of the similar configurations will not be repeated.

As illustrated in Fig. 36, speed planner 33 determines the traveling speed of moving mechanism 30. When moving mechanism 30 enters the entry warning area, speed planner 33 decelerates the traveling speed. Notifier 34 includes LED 305 and speaker 309 in Fig. 8. For example, notifier 34 outputs an alarm indicating that moving mechanism 30 enters the entry warning area to the outside by blinking of LED 305 or sound from speaker 309.

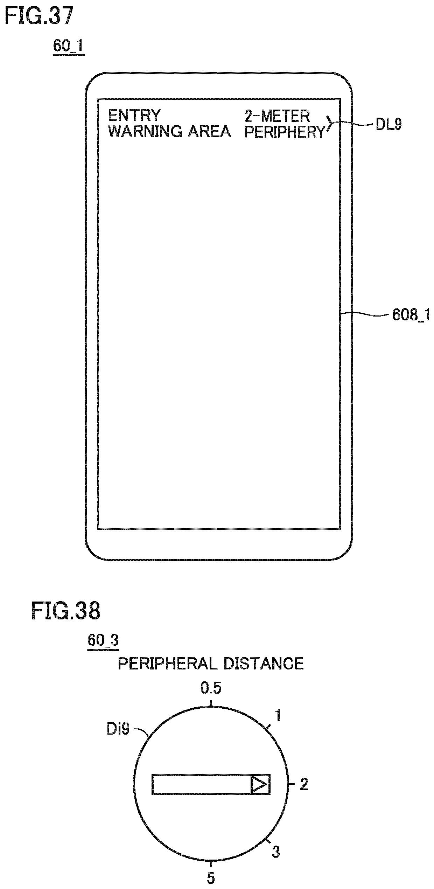

Fig. 37 is a view illustrating the GUI relating to the setting of the entry warning area displayed on touch panel 608_1 of smartphone 60_1 that is an example of portable device 60 in Fig. 36. Touch panel 608_1 is included in operation unit 62 in Fig. 36. As illustrated in Fig. 37, a drop-down list DL9 is displayed on touch panel 608_1. Site worker 40 can set a desired distance (peripheral distance) from the outer periphery of the entry prohibited area for which the entry warning area is set, from among a plurality of distances displayed by tapping drop-down list DL9. Smartphone 60_1 transmits the peripheral distance set by site worker 40 to server 10. Server 10 sets the entry warning area in the range of the peripheral distance from the outer periphery of the entry prohibited area.

Fig. 38 is a view illustrating a setting dial Di9 included in road cone 60_3 that is an example of portable device 60 in Fig. 36. Setting dial Di9 is included in operation unit 62 in Fig. 36. As illustrated in Fig. 38, site worker 40 can set a desired peripheral distance by rotating setting dial Di9. Road cone 60_3 transmits the peripheral distance set by site worker 40 to server 10. Server 10 sets the entry warning area in the range of the peripheral distance from the outer periphery of the entry prohibited area.

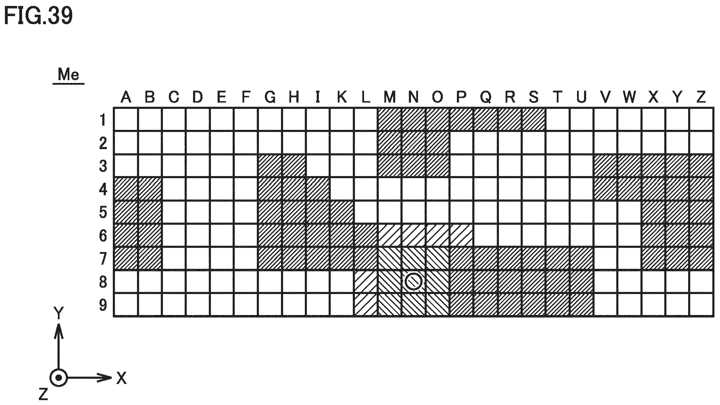

Fig. 39 is a view illustrating an example of environment map Me in which the entry warning area is based on the setting in Figs. 37 and 38. As illustrated in Fig. 39, the current location of portable device 60 is included in cell N8. The cells M7, N7, O7, M8, N8, O8, M9, N9, O9 are set as the entry prohibited areas. Server 10 sets cells M6, N6, O6, P6, L8, L9 overlapping the range of 2 m from the outer periphery of the entry prohibited area as the entry warning areas.

According to production system 9, moving mechanism 30 travels in the entry warning area at a speed slower than usual, and externally warns that moving mechanism 30 is traveling in the entry warning area. Site worker 40 who currently works in the vicinity of the boundary of the entry prohibited area can easily notice moving mechanism 30, and secure time until performing action to avoid moving mechanism 30. As a result, a risk that site worker 40 blocks the path of moving mechanism 30 and a risk that site worker 40 collides with moving mechanism 30 can be reduced.

As described above, according to the system, the method, and the program of the ninth embodiment, the efficiency of the work performed at the workplace where the moving mechanism moves can be improved.

### [Tenth embodiment]

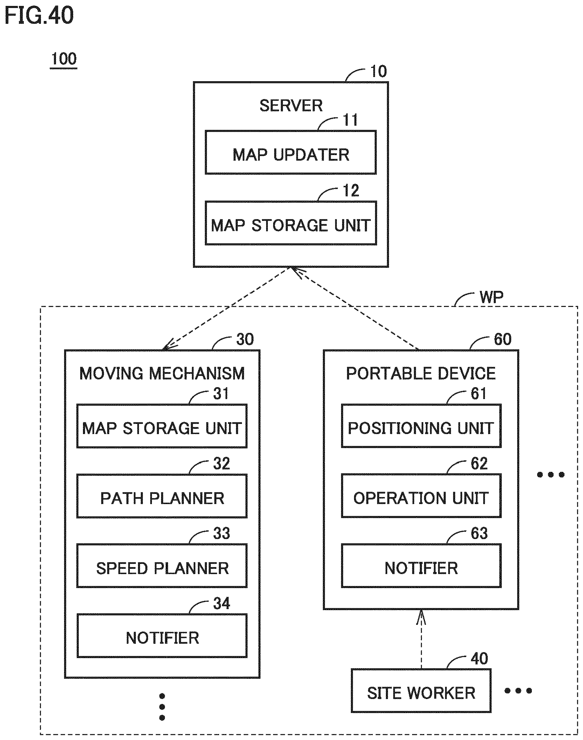

Fig. 40 is a block diagram illustrating a configuration of a production system 100 according to a tenth embodiment. The configuration of production system 100 is a configuration in which notifier 63 in Fig. 15 is added to portable device 60 in Fig. 36. Because other configurations are similar to production system 9, the description of the similar configurations will not be repeated.

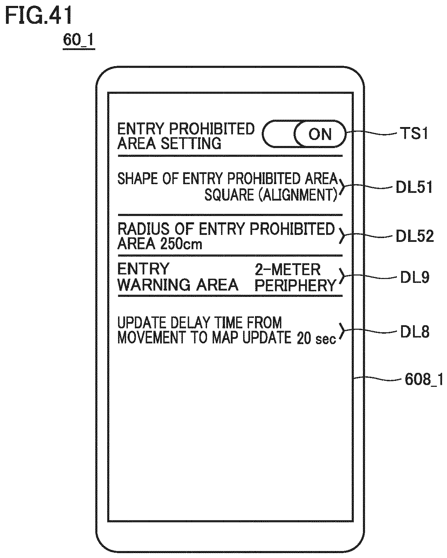

Fig. 41 is a view illustrating a plurality of GUIs displayed on touch panel 608_1 of smartphone 60_1 that is an example of portable device 60 in Fig. 40. As illustrated in Fig. 41, toggle switch TS1 in Fig. 13, drop-down lists DL51, DL52 in Fig. 23, drop-down list DL9 in Fig. 37, and drop-down list DL8 in Fig. 34 are displayed on touch panel 608_1. Site worker 40 inputs the entry prohibition setting of environment map Me through touch panel 608_1. For example, site worker 40 sets ON/OFF of the entry prohibited area through toggle switch TS1, sets the form of the entry prohibited area through drop-down list DL51, sets the size (radius) of the entry prohibited area through drop-down list DL52, sets the size (peripheral distance) of the entry warning area through drop-down list DL9, and sets the update delay time through drop-down list DL8.

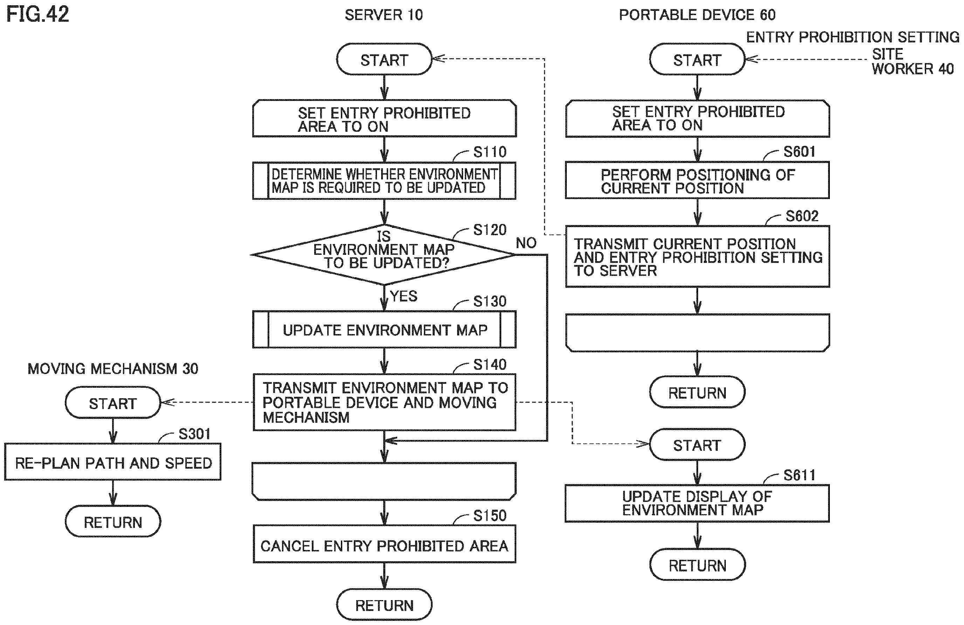

Fig. 42 is a view illustrating processing performed by each of portable device 60, server 10, and moving mechanism 30 when the entry prohibition setting is input to portable device 60 by site worker 40 in Fig. 40. Each processing in Fig. 42 is called by a main routine (not illustrated) that integrally controls each of portable device 60, server 10, and moving mechanism 30. Hereinafter, the step is simply referred to as S.

As illustrated in Fig. 42, when the entry prohibition setting is input to operation unit 62 of portable device 60 by site worker 40, portable device 60 repeats S601, S602 in this order while the entry prohibited area is set to ON. In step S601, positioning unit 61 of portable device 60 performs positioning of the current position of portable device 60, and advances the processing to step S602. In S602, portable device 60 transmits the current position and the entry prohibition setting to server 10. When the entry prohibited area is set to OFF, portable device 60 returns the processing to the main routine.

While the entry prohibited area is set to ON, server 10 repeats S110, S120, S130, S140 in this order. In step S110, map updater 11 of server 10 determines whether the update of environment map Me is required, and advances the processing to step S120. In step S120, map updater 11 of server 10 determines whether to determine the update of environment map Me. When the update of environment map Me is not determined (NO in S120), map updater 11 skips S130, S140. When the update of environment map Me is determined (YES in S120), map updater 11 updates environment map Me in S130, and advances the processing to S140. In S140, map updater 11 transmits updated environment map Me to portable device 60 and moving mechanism 30. When the entry prohibited area is set to OFF, in S150, server 10 cancels the entry prohibited area and the entry warning area in environment map Me, returns both areas to the accessible area, and returns the processing to the main routine.

When receiving environment map Me from server 10, portable device 60 updates the display of environment map Me in S611, and returns the processing to the main routine.

When receiving environment map Me from server 10, path planner 32 and speed planner 33 of moving mechanism 30 re-plan the path and the speed based on environment map Me in S301, and return the processing to the main routine.

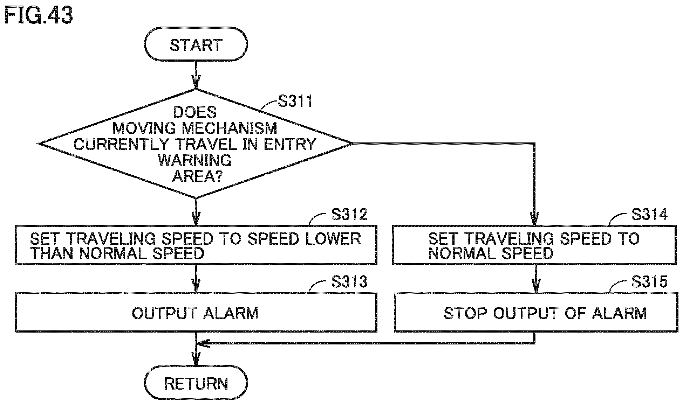

Fig. 43 is a view illustrating a flow of processing performed in moving mechanism 30 of Fig. 40. The processing in Fig. 43 is called by the main routine of moving mechanism 30 for each sampling time.

As illustrated in Fig. 43, in S311, moving mechanism 30 determines whether moving mechanism 30 currently travels in the entry warning area based on environment map Me. When traveling currently in the entry warning area (YES in S311), moving mechanism 30 sets the traveling speed to the speed lower than the normal speed in S312, and advances the processing to S313. In S313, the notifier 34 of moving mechanism 30 outputs an alarm indicating that moving mechanism 30 travels in the entry warning area, and returns the processing to the main routine. When not traveling currently in the entry warning area (NO in S311), moving mechanism 30 sets the traveling speed to the normal speed, and advances the processing to S315. In S315, moving mechanism 30 stops the output of the alarm, and returns the processing to the main routine.

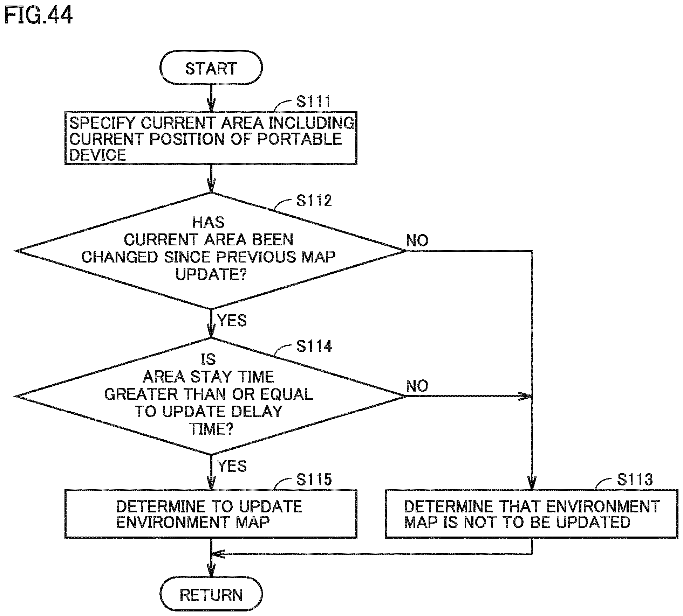

Fig. 44 is a flowchart illustrating a specific processing flow of the map update determination processing (S110) in Fig. 42. As illustrated in Fig. 44, in S111, map updater 11 specifies the current area of environment map Me including the current position of portable device 60, and advances the processing to S112. In S112, map updater 11 determines whether the current area changes from the update timing of previous environment map Me. When the current area does not change from the update timing of previous environment map Me (NO in S112), map updater 11 determines not to update environment map Me in S113, and returns the processing to the main routine.

When the current area changes from the update timing of previous environment map Me (YES in S112), map updater 11 determines whether the time during which portable device 60 stays in the current area (area stay time) is greater than or equal to the update delay time in S114. When the area stay time is shorter than the update delay time (NO in S114), map updater 11 determines not to update environment map Me in S113, and returns the processing to the main routine. When the area stay time is greater than or equal to the update delay time (YES in S114), map updater 11 determines to update the environment map Me in S115, and returns the processing to the main routine.

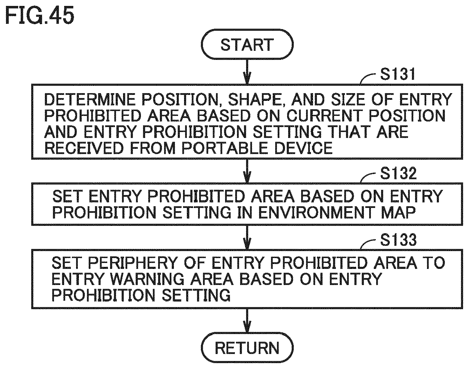

Fig. 45 is a flowchart illustrating a specific processing flow of update processing (S130) of environment map Me in Fig. 42. As illustrated in Fig. 45, in S131, map updater 11 determines the position, shape, and size of the entry prohibited area based on the current position and the entry prohibition setting received from portable device 60, and advances the processing to S132. In S132, map updater 11 sets the entry prohibited area based on the entry prohibition setting in environment map Me, and advances the processing to S133. In S133, map updater 11 sets the periphery of the entry prohibited area as the entry warning area based on the entry prohibition setting, and returns the processing to the main routine.

As described above, according to the system, the method, and the program of the tenth embodiment, the efficiency of work performed at a workplace where the moving mechanism moves can be improved.

### [Eleventh embodiment]

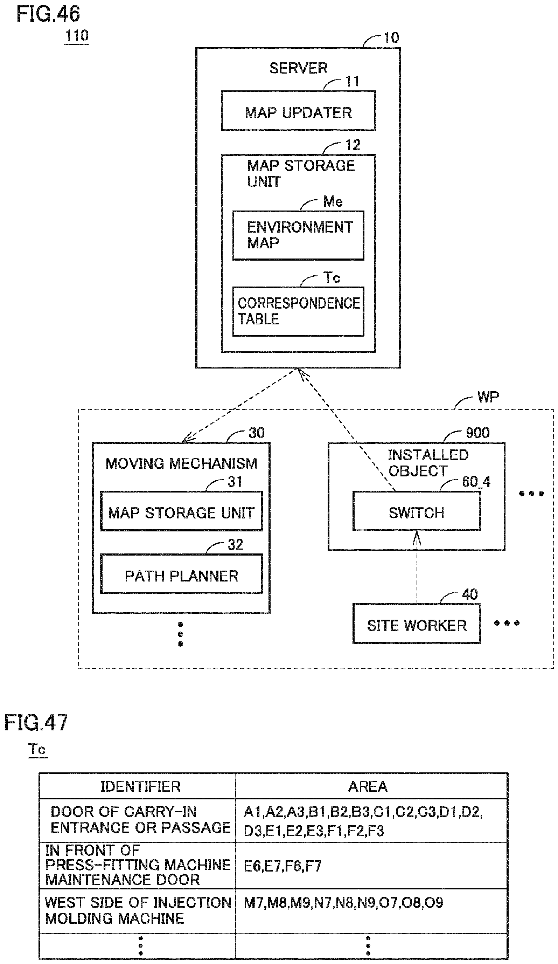

Fig. 46 is a block diagram illustrating a configuration of a production system 110 according to an eleventh embodiment. Production system 110 has a configuration in which a correspondence table Tc is added to map storage unit 12 in Fig. 2 while portable device 60 is replaced with a switch 60_4. Because other configurations are similar to production system 1A, the description of the similar configurations will not be repeated.

As illustrated in Fig. 46, switch 60_4 (position indicator/position detector) is fixed to an installed object 900 (for example, a device, a wall, a pillar, or a door) installed in workplace WP. Site worker 40 switches ON/OFF (state) of switch 60_4. For example, switch 60_4 transmits the identifier of switch 60_4 and ON/OFF of switch 60_4 to server 10 through a local area network (LAN). Based on correspondence table Tc, server 10 sets the area corresponding to the identifier of switch 60_4 that turns ON as the entry prohibited area, and sets the area corresponding to the identifier of switch 60_4 that sets OFF as the entry permitted area. When server 10 and switch 60_4 are directly connected, server 10 may check whether switch 60_4 is energized to specify switch 60_4 that is ON. In addition, switch 60_4 may be a physical switch or a GUI switch such as a human machine interface (HMI).

Fig. 47 is a view illustrating an example of correspondence table Tc in Fig. 46. As illustrated in Fig. 47, an identifier of switch 60_4 and an area where the switch 60_4 is installed are associated with each other in correspondence table Tc. For example, the identifier of switch 60_4 includes the name of the area including the position where switch 60_4 is fixed. The area in Fig. 47 corresponds to the area of environment map Me in Fig. 26. In addition, the information associated with the identifier of switch 60_4 in correspondence table Tc may be the coordinate representing the entry prohibited area. In correspondence table Tc, the entry prohibited area of the polygon may be specified by the coordinate of each vertex of the polygon.

According to production system 110, because positioning for switch 60_4 is not performed, no error is generated in the current position of switch 60_4 specified in server 10. As a result, the entry prohibited area can be accurately set in environment map Me. In addition, site worker 40 does not need to carry and operate the portable device, so that a trouble of site worker 40 due to the setting of the entry prohibited area can be reduced.

As described above, according to the system, the method, and the program of the eleventh embodiment, the efficiency of work performed at a workplace where the moving mechanism moves can be improved.

### [Twelfth embodiment]

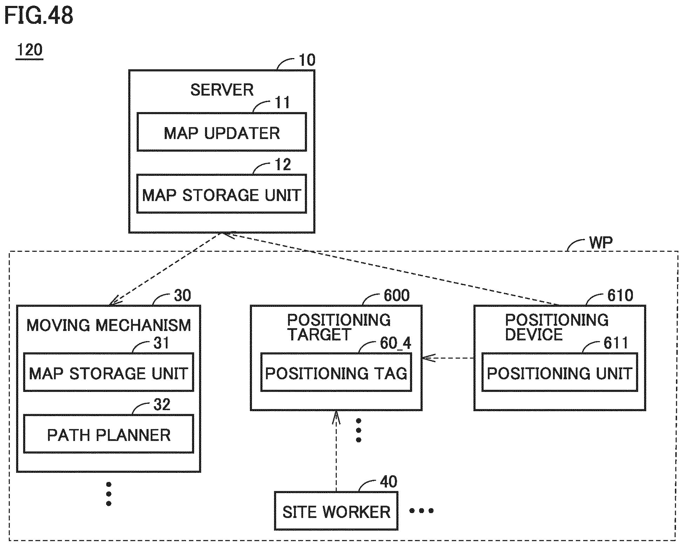

Fig. 48 is a block diagram illustrating a configuration of a production system 120 according to a twelfth embodiment. Production system 120 has a configuration in which portable device 60 is excluded from production system 1A in Fig. 2 while a positioning target 600 and a positioning device 610 are added. Because other configurations are similar to production system 1A, the description of the similar configurations will not be repeated.

A positioning tag 60_4 (position indicator) is fixed to positioning target 600. For example, positioning tag 60_4 includes an integrated circuit (IC) tag or a beacon. For example, positioning target 600 includes a carriage used by site worker 40 in order to carry a load in workplace WP, and a room entry certificate carried by site worker 40. Positioning device 610 (position detector) includes a positioning unit 611. For example, positioning unit 611 measures the current position of positioning tag 60_4 using a radio frequency identifier (RFID), a Bluetooth low energy (BLE) beacon, an ultra wide band (UWB), or the like. Positioning device 610 transmits, to server 10, information with which the current position can be specified.

According to production system 120, positioning devices 610 collectively position the current positions of the plurality of positioning devices 610 arranged in workplace WP and transmit the position to server 10, the communication amount related to information that can identify the current positions of the plurality of positioning devices 610 can be reduced.

As described above, according to the system, the method, and the program of the twelfth embodiment, the efficiency of the work performed at the workplace where the moving mechanism moves can be improved.

### [Thirteenth embodiment]

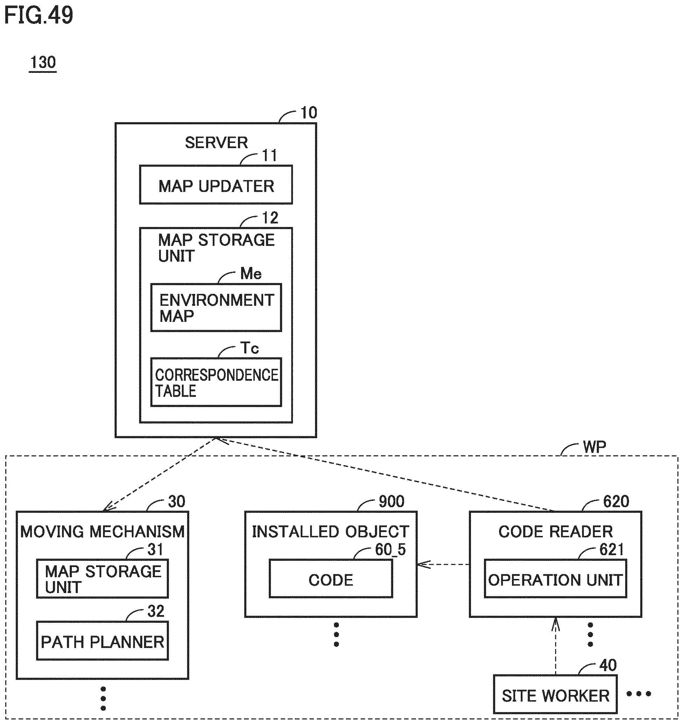

Fig. 49 is a block diagram illustrating a configuration of a production system 130 according to a thirteenth embodiment. Production system 120 has a configuration in which switch 60_4 of production system 110 in Fig. 46 is replaced with a code 60_5 while a code reader 620 is added. Because other configurations are similar to production system 110, the description of the similar configurations will not be repeated.

As illustrated in Fig. 49, code 60_5 (position indicator) is fixed to installed object 900. For example, code 60_5 includes a barcode or a quick response (QR) code. Code reader 620 (position detector) is configured to be portable by site worker 40, and reads information (for example, the identifier) related to code 60_5 from code 60_5. Code reader 620 displays information related to code 60_5 on an operation unit 621. For example, operation unit 621 includes a touch panel. Site worker 40 inputs to operation unit 621 whether to designate the area including the current position of code 60_5 as the entry prohibited area. Code reader 620 transmits the entry prohibition setting of whether to designate the area as the entry prohibited area and the identifier of the code 60_5 to server 10. Server 10 sets the area corresponding to the identifier of code 60_5 received from code reader 620 as the entry prohibited area or the accessible area based on correspondence table Tc and the setting of site worker 40.

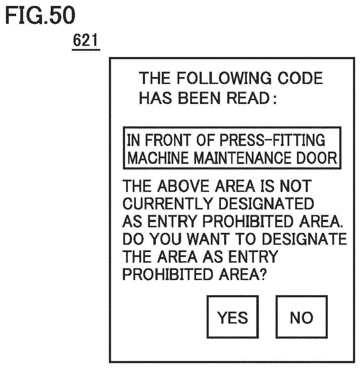

Fig. 50 is a view illustrating an example of information related to code 60_5 displayed on operation unit 621 in Fig. 49. As illustrated in Fig. 50, operation unit 621 displays the identifier of code 60_5 (for example, the name of the area "in front of the press-fitting machine maintenance door") and whether the area corresponding to the identifier is designated as the entry prohibited area. Site worker 40 can designate the area corresponding to the position where code 60_5 is fixed as the entry prohibited area by tapping a YES button, and can designate the area as the accessible area by tapping a NO button.

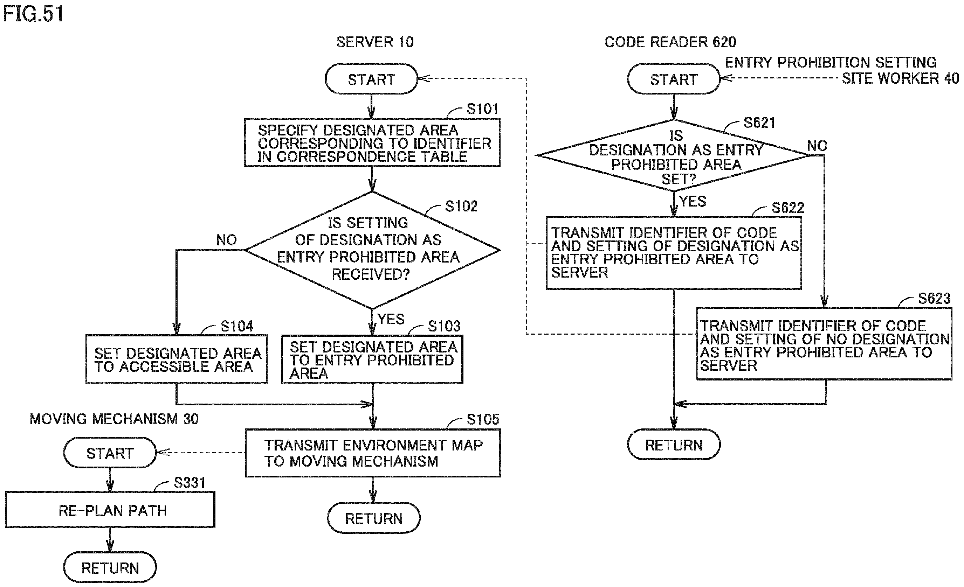

Fig. 51 is a view illustrating processing performed by each of code reader 620, server 10, and moving mechanism 30 when the entry prohibition setting is input to code reader 620 by site worker 40 in Fig. 49. Each processing in Fig. 51 is called by the main routine (not illustrated) that integrally controls each of code reader 620, server 10, and moving mechanism 30.

As illustrated in Fig. 51, when the entry prohibition setting is input to operation unit 621 of code reader 620 by site worker 40, code reader 620 determines whether the designation of the entry prohibited area is set is performed in S621. When the setting of the designation as the entry prohibited area is made (YES in S621), code reader 620 transmits the identifier of code 60_5 and the setting of the designation as the entry prohibited area to server 10 in S622, and returns the processing to the main routine. When the setting of no designation as the entry prohibited area is made (NO in S621), code reader 620 transmits the identifier of code 60_5 and the setting of no designation as the entry prohibited area to server 10 in S623, and returns the processing to the main routine.

In S101, map updater 11 of server 10 specifies the designated area corresponding to the identifier received from code reader 620 in correspondence table Tc, and advances the processing to S102. In S102, map updater 11 determines whether the setting of the designation as the entry prohibited area is received from code reader 620. When receiving the setting of the designation as the entry prohibited area from code reader 620 (YES in S102), map updater 11 sets the designated area of environment map Me to the entry prohibited area in S103, and advances the processing to S105. When receiving the setting of no designation as the entry prohibited area from code reader 620 (NO in S102), map updater 11 sets the designated area of environment map Me to the accessible area in S104, and advances the processing to S105. In S105, map updater 11 transmits environment map Me to moving mechanism 30, and returns the processing to the main routine.

In S331, path planner 32 of moving mechanism 30 re-plans the path based on environment map Me received from server 10, and returns the processing to the main routine.

According to production system 130, because positioning for code 60_5 is not performed, the error is not generated in the current position of code 60_5 specified in server 10. As a result, the entry prohibited area can be accurately set in environment map Me.

As described above, according to the system, the method, and the program of the thirteenth embodiment, the efficiency of the work performed at the workplace where the moving mechanism moves can be improved.

### <Appendix>

The above embodiments include the following technical ideas.

### [Configuration 1]

A system comprising:
a moving mechanism (30) configured to move in a workplace (WP) based on an environment map (Me) corresponding to the workplace (WP);
a map management unit (10) configured to manage the environment map (Me); and
a position detector (60) configured to transmit, to the map management unit (10), information with which a current position of each of at least one position indicator (60, 610, 620) disposed at the workplace (WP) can be specified,
wherein the map management unit (10) specifies a current area including the current position on the environment map (Me), and
the moving mechanism (30) moves in the workplace (WP) while avoiding an entry prohibited area, based on the environment map (Me) in which, based on a state of each of the at least one position indicator (60), a current area of the each of the at least one position indicator (60) is set as the entry prohibited area.

### [Configuration 2]

The system described in configuration 1, wherein
the position detector (60) changes setting related to the entry prohibited area in response to input by a user (40) to the position detector (60),
the setting includes setting related to whether an area including the current position is designated as the entry prohibited area, and
the map management unit (10) specifies the entry prohibited area based on the setting.

### [Configuration 3]

The system described in configuration 2, wherein the setting includes setting related to a shape of the entry prohibited area and setting related to a size of the entry prohibited area.

### [Configuration 4]

The system described in configuration 2 or 3, wherein
the setting includes setting related to whether the entry prohibited area can be formed by a plurality of position indicators (60) and setting related to a group to which the plurality of position indicators (60) belong, and
the entry prohibited area includes an area surrounded by the plurality of position indicators (60).

### [Configuration 5]

The system described in any one of configurations 2 to 4, wherein
the setting includes setting related to an update delay time from when movement of the at least one position indicator (60) is detected to when the environment map (Me) is updated, and
the map management unit (10) sets the current area as the entry prohibited area when the current area including the current position is not set as the entry prohibited area in the environment map (Me) and time during which the current position is included in the current area is longer than the update delay time.

### [Configuration 6]

The system described in any one of configurations 2 to 5, wherein
the setting includes setting related to a size of an entry warning area set around the entry prohibited area, and
when the moving mechanism (30) moves in the entry warning area, the moving mechanism (30) decelerates a speed of the moving mechanism (30) below a normal speed and outputs an alarm to the outside, the alarm indicating that the moving mechanism is moving in the entry warning area.

### [Configuration 7]

The system described in any one of configurations 1 to 6, wherein
the map management unit (10) transmits information related to the current area to the moving mechanism (30) when the current area is not set as the entry prohibited area on the environment map (Me), and
the moving mechanism (30) sets the current area as the entry prohibited area on the environment map (Me), and sets an area not including the current position as an accessible area where the moving mechanism (30) is movable on the environment map (Me).

### [Configuration 8]

The system described in any one of configurations 1 to 7, wherein the position detector (60) is configured to be portable by a user (40), and displays the environment map (Me) in which the entry prohibited area is set.

### [Configuration 9]

The system described in any one of configurations 1 to 8, wherein the position detector (60) displays a region corresponding to the entry prohibited area at the workplace (WP).

### [Configuration 10]

The system described in any one of configurations 1 to 9, further comprising an augmented reality display unit (70) configured to image the at least one position indicator (60),
wherein the augmented reality display unit (70) displays a computer graphics (CG) image indicating the entry prohibited area in a superimposed manner on an image of the at least one position indicator (60).

### [Configuration 11]

The system described in any one of configurations 1 to 10, further comprising an area planner (80) configured to create a plan of the entry prohibited area,
wherein the map management unit (10) transmits a difference between the plan and the setting of the entry prohibited area based on the disposition of the at least one position indicator (60) to each of the at least one position indicator (60) and the area planner (80), and
each of the at least one position indicator (60) and the area planner (80) outputs information related to the difference.

### [Configuration 12]

The system described in any one of configurations 1 to 11, further comprising an area divider (90) configured to divide the environment map (Me) into a plurality of areas.

### [Configuration 13]

The system described in any one of configurations 1 to 12, wherein the at least one position indicator (60) is configured to be movable by the user (40).

### [Configuration 14]

The system described in any one of configurations 1 to 12, wherein
the at least one position indicator (60_4) is fixed to the workplace (WP),
the position detector (60_4) transmits an identifier of each of the at least one position indicator (60_4) to the map management unit (10), and
the map management unit (10) specifies the current area based on a correspondence between the identifier of each of the at least one position indicator (60) and information related to a position where each of the at least one position indicator (60) is fixed.

### [Configuration 15]

The system described in any one of configurations 1 to 14, wherein each of the at least one position indicator (60) is the position detector (60).

### [Configuration 16]

A method for managing an environment map (Me) corresponding to a workplace (WP) in which a moving mechanism (30) moves,
the method comprising:
transmitting (S602) information with which a current position of each of at least one position indicator (60) disposed at the workplace (WP) can be specified; and
specifying (S111) a current area including the current position on the environment map (Me),
wherein the moving mechanism (30) moves in the workplace (WP) while avoiding an entry prohibited area, based on the environment map (Me) in which, based on a state of each of the at least one position indicator (60), a current area of the each of the at least one position indicator (60) is set as the entry prohibited area.

### [Configuration 17]

A program managing an environment map (Me) corresponding to a workplace (WP) in which a moving mechanism (30) moves,
wherein the program, when executed by a processor (103, 603), causes the processor to execute:
transmitting information with which a current position of each of at least one position indicator (60) disposed at the workplace (WP) can be specified; and
specifying a current area including the current position on the environment map (Me), and
the moving mechanism (30) moves in the workplace (WP) while avoiding an entry prohibited area, based on the environment map (Me) in which, based on a state of each of the at least one position indicator (60), a current area of the each of the at least one position indicator (60) is set as the entry prohibited area.

Although the embodiment of the present invention has been described, it should be considered that the disclosed embodiment is an example in all respects and not restrictive. The scope of the present invention is indicated by the claims, and it is intended that all modifications within the meaning and scope of the claims are included in the present invention.

## Claims

1. A system comprising:
a moving mechanism (30) configured to move in a workplace (WP) based on an environment map (Me) corresponding to the workplace (WP);
a map management unit (10) configured to manage the environment map (Me); and
a position detector (60) configured to transmit, to the map management unit (10), information with which a current position of each of at least one position indicator (60, 610, 620) disposed at the workplace (WP) can be specified,
wherein the map management unit (10) specifies a current area including the current position on the environment map (Me), and
the moving mechanism (30) moves in the workplace (WP) while avoiding an entry prohibited area, based on the environment map (Me) in which, based on a state of each of the at least one position indicator (60), a current area of the each of the at least one position indicator (60) is set as the entry prohibited area.

2. The system according to claim 1, wherein
the position detector (60) changes setting related to the entry prohibited area in response to input by a user (40) to the position detector (60),
the setting includes setting related to whether an area including the current position is designated as the entry prohibited area, and
the map management unit (10) specifies the entry prohibited area based on the setting.

3. The system according to claim 2, wherein the setting includes setting related to a shape of the entry prohibited area and setting related to a size of the entry prohibited area.

4. The system according to claim 2 or 3, wherein
the setting includes setting related to whether the entry prohibited area can be formed by a plurality of position indicators (60) and setting related to a group to which the plurality of position indicators (60) belong, and
the entry prohibited area includes an area surrounded by the plurality of position indicators (60).

5. The system according to any one of claims 2 to 4, wherein
the setting includes setting related to an update delay time from when movement of the at least one position indicator (60) is detected to when the environment map (Me) is updated, and
the map management unit (10) sets the current area as the entry prohibited area when the current area including the current position is not set as the entry prohibited area in the environment map (Me) and time during which the current position is included in the current area is longer than the update delay time.

6. The system according to any one of claims 2 to 5, wherein
the setting includes setting related to a size of an entry warning area set around the entry prohibited area, and
when the moving mechanism (30) moves in the entry warning area, the moving mechanism (30) decelerates a speed of the moving mechanism (30) below a normal speed and outputs an alarm to the outside, the alarm indicating that the moving mechanism is moving in the entry warning area.

7. The system according to any one of claims 1 to 6, wherein
the map management unit (10) transmits information related to the current area to the moving mechanism (30) when the current area is not set as the entry prohibited area on the environment map (Me), and
the moving mechanism (30) sets the current area as the entry prohibited area on the environment map (Me), and sets an area not including the current position as an accessible area where the moving mechanism (30) is movable on the environment map (Me).

8. The system according to any one of claims 1 to 7, further comprising an augmented reality display unit (70) configured to image the at least one position indicator (60),
wherein the augmented reality display unit (70) displays a computer graphics (CG) image indicating the entry prohibited area in a superimposed manner on an image of the at least one position indicator (60).

9. The system according to any one of claims 1 to 8, further comprising an area planner (80) configured to create a plan of the entry prohibited area,
wherein the map management unit (10) transmits a difference between the plan and the setting of the entry prohibited area based on the disposition of the at least one position indicator (60) to each of the at least one position indicator (60) and the area planner (80), and
each of the at least one position indicator (60) and the area planner (80) outputs information related to the difference.

10. The system according to any one of claims 1 to 9, further comprising an area divider (90) configured to divide the environment map (Me) into a plurality of areas.

11. The system according to any one of claims 1 to 10, wherein the at least one position indicator (60) is configured to be movable by the user (40).

12. The system according to any one of claims 1 to 10, wherein
the at least one position indicator (60_4) is fixed to the workplace (WP),
the position detector (60_4) transmits an identifier of each of the at least one position indicator (60_4) to the map management unit (10), and
the map management unit (10) specifies the current area based on a correspondence between the identifier of each of the at least one position indicator (60) and information related to a position where each of the at least one position indicator (60) is fixed.

13. The system according to any one of claims 1 to 12, wherein each of the at least one position indicator (60) is the position detector (60).

14. A method for managing an environment map (Me) corresponding to a workplace (WP) in which a moving mechanism (30) moves,
the method comprising:
transmitting (S602) information with which a current position of each of at least one position indicator (60) disposed at the workplace (WP) can be specified; and
specifying (S111) a current area including the current position on the environment map (Me),
wherein the moving mechanism (30) moves in the workplace (WP) while avoiding an entry prohibited area, based on the environment map (Me) in which, based on a state of each of the at least one position indicator (60), a current area of the each of the at least one position indicator (60) is set as the entry prohibited area.

15. A program for managing an environment map (Me) corresponding to a workplace (WP) in which a moving mechanism (30) moves,
wherein the program, when executed by a processor (103, 603), causes the processor to execute:
transmitting information with which a current position of each of at least one position indicator (60) disposed at the workplace (WP) can be specified; and
specifying a current area including the current position on the environment map (Me), and
the moving mechanism (30) moves in the workplace (WP) while avoiding an entry prohibited area, based on the environment map (Me) in which, based on a state of each of the at least one position indicator (60), a current area of the each of the at least one position indicator (60) is set as the entry prohibited area.
